# EUROPÄISCHE PATENTSCHRIFT

(11) **EP 4 591 034 B1**
(45) Veröffentlichungstag und Bekanntmachung des Hinweises auf die Patenterteilung: **04.11.2026**
(21) Anmeldenummer: 23772866.2
(22) Anmeldetag: 19.09.2023
(51) Int. Cl.: G01K 13/024, G01L 11/00, G01F 1/34, G01F 1/50, G01F 1/684, G01F 1/699, G01F 1/74, G01F 15/04, G01N 25/18, G01F 1/698, G01N 25/00, G01F 1/688, G01F 1/69, G01K 1/20, G01K 1/26

(54) **SENSORANORDNUNG**
SENSOR ARRANGEMENT
ENSEMBLE CAPTEUR

(30) Priorität: 20.09.2022 DE 102022209906
(43) Veröffentlichungstag der Anmeldung: 30.07.2025
(73) Patentinhaber: Hahn-Schickard-Gesellschaft für angewandte Forschung e.V., 78052 Villingen-Schwenningen (DE)
(72) Erfinder: RAIMANN, Philipp, 78052 Villingen-Schwenningen (DE); BILLAT, Sophie, 78052 Villingen-Schwenningen (DE); HEDRICH, Frank, 78052 Villingen-Schwenningen (DE)
(74) Vertreter: Pfitzner, Hannes
(86) Internationale Anmeldenummer: PCT/EP2023/075799
(87) Internationale Veröffentlichungsnummer: WO 2024/061903

(56) Entgegenhaltungen:
- WO-A1-01/18500
- WO-A1-2021/003140
- US-A1- 2017 307 553
- US-A1- 2021 088 387
- US-B1- 6 535 824
- US-B2- 10 942 139
- US-B2- 9 945 800

## Beschreibung

Ausführungsbeispiele der vorliegenden Erfindung beziehen sich auf eine Sensoranordnung sowie auf ein entsprechendes Verfahren zur Auswertung. Weitere Ausführungsbeispiele beziehen sich auf einen Flusssensor mit einer entsprechenden Sensoranordnung und/oder einen Drucksensor mit einer entsprechenden Sensoranordnung.

Die Ausgangssignale von thermischen Strömungssensoren (allgemein Flusssensor) werden nicht nur durch die Flussrate (I/min), sondern auch durch die Gaseigenschaften, wie z. B. Dichte ρ, die Wärmeleitfähigkeit k und/oder die spezifische Wärmekapazität c des strömenden Mediums beeinflusst. Die Gaseigenschaften sind wiederum abhängig von der Temperatur und dem Druck. Ändert sich beispielsweise bei einer konstanten Flussrate die Gaszusammensetzung, Temperatur und/oder der Druck, so ändert sich das Ausgangssignal, was fälschlicherweise als Änderung der Flussrate interpretiert werden kann. Daher werden thermische Flusssensoren entweder auf ein Gas/Gasgemisch kalibriert oder die Gaseigenschaften müssen durch weitere zusätzliche Sensoren bestimmt werden, um das resultierende Ausgangssignal mithilfe von Algorithmen zu kompensieren. Die Signalkompensation ist hierbei genauer, wenn sich die Sensoren in unmittelbarer Nähe des Strömungssensors befinden.

Stand der Technik ist es also, Strömungssensoren auf Gaseigenschaften (bekannten Druck, Temperatur und Gaszusammensetzung) zu kalibrieren oder durch zusätzliche eigenständige MEMS-Sensoren (z.B. Umweltsensoren) eine Signalkompensation zu ermöglichen. Das setzt gemäß dem Stand der Technik die Integration von Sensoren mit unterschiedlichen Messprinzipien voraus. Bei typischen Sensoranordnungen mit geringer Komplexität lässt sich die Wärmeleitfähigkeit sowie die volumetrische Wärmekapazität nicht einfach bestimmen, um so ein Kalibrieren zu ermöglichen. Deshalb besteht der Bedarf nach einem verbesserten Ansatz. Des Weiteren offenbart die Patentliteratur weiteren Stand der Technik. Zu erwähnen sind die Veröffentlichungen: US 10 942 139 B2, WO 2021/003140 A1, US 9 945 800 B2 und US 2017/307553 A1.

Ausführungsbeispielen der vorliegenden Erfindung liegt die Aufgabe zugrunde, dass ein Konzept geschaffen werden soll, das es ermöglicht, volumetrische Wärmekapazität und Wärmeleitfähigkeit zuverlässig und genau mit einer Messanordnung mit geringer Komplexität zu ermitteln.

Die Aufgabe wird durch den Gegenstand der unabhängigen Patentansprüche gelöst.

Ausführungsbeispiele der vorliegenden Erfindung schaffen eine Sensoranordnung mit einer ersten Sensorzelle und einer zweiten Sensorzelle sowie einer Auswertevorrichtung. Die erste Sensorzelle ist thermisch mittels eines Heizers anregbar bzw. umfasst einen Heizer zur thermischen Anregung. Die zweite Sensorzelle ist ebenfalls thermisch mittels eines (eigenen) Heizers anregbar bzw. umfasst einen (eigenen) Heizer zur thermischen Anregung. Bei der ersten und zweiten Sensorzelle handelt es sich um gleichartige Sensorzellen, die allerdings unterschiedlich dimensioniert bzw. unterschiedlich ausgelegt sind. Die erste und zweite Sensorzelle sind ausgebildet, um in Abhängigkeit von einer Gaseigenschaft eines die erste und die zweite Sensorzelle umgebenden Gases, insbesondere einer Wärmeleitfähigkeit bzw. volumetrischen Wärmekapazität bzw. einer Temperatur bzw. einem Druck, ein jeweiliges Schwingungsverhalten, insbesondere ein (thermisches) Schwingungsverhalten, des Heizers auszubilden. Die Auswertung ist ausgebildet, das jeweilige Schwingungsverhalten der ersten Sensorzelle und der zweiten Sensorzelle gemeinsam auszuwerten, um die Wärmeleitfähigkeit und die volumetrische Wärmekapazität zu bestimmen (oder um physikalische Parameter einer ersten Gruppe (zu welcher die Wärmeleitfähigkeit gehört) und physikalische Parameter einer zweiten Gruppe (zu welcher die volumetrische Wärmekapazität gehört) zu bestimmen). Das Schwingungsverhalten kann entsprechend Ausführungsbeispielen durch einen Detektor je Sensorzelle detektiert werden. Die Auswertung bestimmt die Wärmeleitfähigkeit auf Basis des Schwingungsverhaltens der ersten Sensorzelle, wobei die volumetrische Wärmekapazität auf Basis des Schwingungsverhaltens der zweiten Sensorzelle bestimmt wird.

Ausführungsbeispielen der vorliegenden Erfindung liegt die Erkenntnis zugrunde, dass durch die Verwendung von zwei unterschiedlichen dimensionierten oder zumindest zwei unterschiedlich ausgelegten Sensoren es möglich ist, die zwei Sensoren für die Detektion unterschiedlicher physikalischer Parameter zugehörig zu unterschiedlichen Gruppen, nämlich für Gruppe 1 die Wärmeleitfähigkeit und für Gruppe 2 die volumetrische Wärmekapazität, zu nutzen. Aufgrund der unterschiedlichen Dimensionierungen werden unterschiedlich hohe Empfindlichkeiten/Sensitivitäten für die unterschiedlichen physikalischen Parameter zugeordnet zu den unterschiedlichen Gruppen ausgebildet. Unterschiedliche Sensitivitäten über den Frequenzbereich oder Sensorgeometrie erlaubt die unabhängige Bestimmung der volumetrischen Wärmekapazität cᵥ sowie der Wärmeleitfähigkeit k. Folglich werden bei der Sensoranordnung mehrere thermische Sensoren verwendet, die entweder gleich oder unabhängig voneinander angeregt und ausgelesen werden können. Mindestens ein Sensor wird (in einem Frequenzbereich betrieben und/oder) so dimensioniert, dass er eine hohe Empfindlichkeit gegenüber der Wärmeleitfähigkeit k aufweist und zugleich eine geringe Querempfindlichkeit gegenüber der volumetrischen Wärmekapazität cᵥ besitzt. Mindestens ein weiterer Sensor wird (in einem Frequenzbereich betrieben und/oder) so dimensioniert, dass er eine hohe Empfindlichkeit gegenüber der volumetrischen Wärmekapazität cᵥ aufweist und zugleich eine geringe Querempfindlichkeit gegenüber der Wärmeleitfähigkeit k besitzt. Hieraus ergeben sich zwei Betriebsmodi, nämlich unterschiedliche Dimensionierung + unterschiedliche Frequenzen und unterschiedliche Dimensionierung + gleiche Frequenzen.

Zur Sensorzelle: Entsprechend Ausführungsbeispielen weist die erste Sensorzelle und/oder die zweite Sensorzelle eine Kavität mit einem Heizer bzw. beabstandeten Heizer auf. Die Kavität bzw. der Boden der Kavität formt eine Wärmesenke. Insofern kann der Aufbau allgemein formuliert werden als Wärmesenke mit einem beabstandeten Heizer oder auch Wärmesenke mit einem von der Wärmesenke beabstandeten Heizsteg. Entsprechend Ausführungsbeispielen ist der Heizer durch einen Heizsteg oder eine freitragende Struktur bzw. freitragende Brückenstruktur gebildet. Entsprechend Ausführungsbeispielen ist der Heizer bzw. Heizsteg bzw. die freitragende Struktur/Brückenstruktur dazu ausgebildet, um thermisch zu schwingen und so das Schwingungsverhalten entsprechend auszubilden. Das heißt also, dass entsprechend Ausführungsbeispielen das Schwingungsverhalten der ersten bzw. der zweiten Sensorzelle jeweils insbesondere durch den Heizer/Heizsteg/die freitragende Struktur geformt wird. Entsprechend weiteren Ausführungsbeispielen kann die erste und/oder die zweite Sensorzelle einen Detektor aufweisen, der ausgebildet ist, um das Schwingungsverhalten zu detektieren.

Zum Detektor: Die Auswertung ist entsprechend Ausführungsbeispielen ausgebildet, das Schwingungsverhalten der ersten und der zweiten Sensorzelle anhand der dynamischen Temperaturantwort, insbesondere anhand der Amplitude und/oder anhand der Frequenz und/oder anhand der Phase zu bestimmen. Entsprechend weiteren Ausführungsbeispielen kann auch ein Modell verwendet werden, das die Anregung bei Grenzfrequenz als proportional zur Temperaturleitfähigkeit des Gases beschreibt, wobei die Temperaturleitfähigkeit als Division der Wärmefähigkeit durch die volumetrische Wärmekapazität definiert ist.

Bei obigen Ausführungsbeispielen wurde davon ausgegangen, dass die erste und die zweite Sensorzelle unterschiedlich dimensioniert sind. Eine unterschiedliche Dimensionierung liegt vor, wenn die erste und/oder zweite Sensorzelle sich hinsichtlich eines oder mehrerer Parameter aus folgender Gruppe unterscheidet:
- Volumen des Sensors,
- Breite der Membran,
- Dicke der Membran,
- Fläche der Membran,
- Breite der Kavität,
- Höhe der Kavität,
- Fläche der Kavität,
- Volumen der Kavität,
- Länge des Heizers,
- Dicke des Heizers,
- Geometrie des Heizers,
- Material der Membran.

Entsprechend Ausführungsbeispielen ist die Konsequenz aus der unterschiedlichen Dimensionierung bzw. Auslegung die, dass die erste und/oder zweite Sensorzelle für jeweils unterschiedliche Grenzfrequenzen ausgelegt sind, die sich mindestens um Faktor 3 oder sogar mindestens um Faktor 5 oder bevorzugterweise sogar mindestens um Faktor 10 unterscheiden. Entsprechend Ausführungsbeispielen ergibt sich hieraus die Konsequenz, dass die Empfindlichkeiten der zweiten Sensorzelle für volumetrische Wärmekapazität um mindestens Faktor 3, mindestens Faktor 4 oder mindestens Faktor 5 höher ist als die Empfindlichkeit der ersten Sensorzelle für die volumetrische Wärmekapazität. Umgekehrt ergibt es sich, dass die Empfindlichkeit der ersten Sensorzelle für die Wärmeleitfähigkeit um mindestens Faktor 1,1 oder mindestens Faktor 1,2 höher ist als die Empfindlichkeit der zweiten Sensorzelle für die Wärmeleitfähigkeit. Dies formt vorteilweise die Basis, dass mittels den unterschiedlich dimensionierten Sensoren bzw. unterschiedlich ausgelegten Sensoren die physikalischen Parameter zugeordnet zu unterschiedlichen Gruppen (Wärmeleitfähigkeit bzw. Wärmekapazität) unabhängig voneinander bestimmt werden können.

Entsprechend Ausführungsbeispielen ist die Auswertung ausgebildet, die erste und/oder zweite Sensorzelle zum Schwingen, z. B. periodisch, anzuregen. Hierbei kann eine Gleichfrequenz für die zwei Sensorzellen erfolgen. Die zwei Sensorzellen können mit der gleichen Frequenz zeitgleich angeregt werden. Entsprechend einer alternativen Variante können unterschiedliche Frequenzen (zeitgleich) verwendet werden. Beispielsweise kann die Anregung mittels einer Anregungsfrequenz erfolgen, wobei die Anregungsfrequenz oder die Auswertefrequenz für die erste Sensorzelle unterhalb der Grenzfrequenz, z. B. unterhalb ½ Grenzfrequenz oder z. B. unterhalb ¼ der Grenzfrequenz, liegen kann. Alternativ oder additiv kann die zweite Sensorzelle mit einer Anregungsfrequenz angeregt werden, wobei die Anregungsfrequenz oder die Auswertefrequenz der zweiten Sensorzelle oberhalb einer Grenzfrequenz liegt, z. B. beim Dreifachen der Grenzfrequenz.

Zur Dimensionierung / Auslegung: Ferner kann entsprechend Ausführungsbeispielen zwischen zwei Ansätzen unterschieden werden:
- minimaler Ansatz: Empfindlichkeit ist ausreichend verschieden
- radikaler Ansatz: Sensor ist maximal unempfindlich, der andere jeweils im Maximum.

Das jeweilige Prinzip wird über die Sensordimensionierung und/oder den Arbeitspunkt selektiert.

Zur Implementierung: Bezüglich des Aufbaus sei noch einmal darauf hingewiesen, dass entsprechend Ausführungsbeispielen die erste und/oder die zweite Sensorzelle bevorzugterweise auf einem gemeinsamen Chip angeordnet sind, z. B. monolithisch auf einem Chip integriert sind. In denselben Chip kann die Auswertung integriert sein. Entsprechend Ausführungsbeispielen kann die Auswertung als ASIC implementiert sein, der mit dem Chip verbunden ist oder monolithisch in einem gemeinsamen Chip aufgebaut ist (der die erste und die zweite Sensorzelle beherbergt). Entsprechend weiteren Ausführungsbeispielen kann die Sensoranordnung auch ohne die Auswertung verwendet werden. Hierbei umfasst die Sensoranordnung dann eine erste Sensorzelle und eine zweite Sensorzelle, die jeweils thermisch mittels eines Heizers anregbar sind. Hier ist dann das jeweilige Schwingungsverhalten der ersten Sensorzelle und der zweiten Sensorzelle gemeinsam auswertbar, um die Wärmeleitfähigkeit und volumetrische Wärmekapazität zu bestimmen, wobei die Wärmeleitfähigkeit auf Basis des Schwingungsverhaltens der ersten Sensorzelle bestimmt wird und wobei die volumetrische Wärmekapazität auf Basis des Schwingungsverhaltens der zweiten Sensorzelle bestimmt wird.

Die Sensoranordnung lässt sich vorteilhafterweise in einen Flusssensor einsetzen, wobei der Flusssensor ausgebildet ist, einen Fluss unter Berücksichtigung der bestimmten Wärmeleitfähigkeit und volumetrischen Wärmekapazität zu bestimmen. Eine weitere Anwendung bezieht sich entsprechend weiteren Ausführungsbeispielen auf einen Drucksensor, der ausgebildet ist, den Druck unter Berücksichtigung der volumetrischen Wärmekapazität und der Wärmeleitfähigkeit zu bestimmen. Für diese beiden Sensoren ist es deshalb vorteilhaft, da, wie eingangs erwähnt, der gemessene Volumenstrom bzw. der Fluss oder auch der gemessene Druck stark von den Gaseigenschaften abhängig ist, so dass unter Kenntnis des bzw. der physikalischen Parameter Wärmeleitfähigkeit und volumetrische Wärmekapazität eine Kalibrierung erfolgen kann bzw. die Auswertung entsprechend erfolgen kann.

Ein weiteres Ausführungsbeispiel bezieht sich auf ein Verfahren zum Auswerten einer Sensoranordnung mit dem zentralen Schritt des gemeinsames Auswertens eines jeweiligen Schwingungsverhaltens des ersten und des zweiten Sensors, um die Wärmeleitfähigkeit und volumetrische Wärmekapazität zu bestimmen (oder um physikalische Parameter einer ersten Gruppe und physikalische Parameter einer zweiten Gruppe) zu bestimmen, wobei die Wärmeleitfähigkeit auf Basis des Schwingungsverhaltens des ersten Sensors bestimmt wird und wobei die volumetrische Wärmekapazität auf Basis des Schwingungsverhaltens des zweiten Sensors bestimmt wird.

Entsprechend weiteren Ausführungsbeispielen kann das Verfahren computerimplementiert sein.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.
- Fig. 1a und 1b: zeigt in einer Schnittdarstellung (Fig. 1a) und einer Draufsicht (Fig. 1b) schematisch eine Sensorzelle zur Verwendung in Ausführungsbeispielen;
- Fig. 2a-2q: zeigen schematische Darstellungen von Sensorzellen zur Verwendung in erweiterten Ausführungsbeispielen;
- Fig. 3a und 3b: zeigen ein schematisches Ausführungsbeispiel einer Sensoranordnung mit zwei Sensorzellen gemäß einem Hauptausführungsbeispiel;
- Fig. 3c und 3d: zeigen schematische Diagramme zur Illustration möglicher Sensorzellendimensionen gemäß Ausführungsbeispielen;
- Fig. 4a und 4b: zeigen schematische Diagramme zur Erläuterung der Empfindlichkeit gegenüber Wärmeleitfähigkeit und volumetrische Wärmekapazität für zwei Sensorzellen gemäß Ausführungsbeispielen;
- Fig. 5: zeigt ein schematisches Blockschaltbild einer Sensorzelle mit einer Auswerteelektronik gemäß einem Vergleichsaspekt;
- Fig. 6a und 6b: zeigen schematische Diagramme zur Illustration des Vergleichsaspekts aus Fig. 5;
- Fig. 7a und 7b: zeigen schematische Diagramme zur Illustration der Empfindlichkeiten aufgetragen über die Frequenz zur Erläuterung möglicher Auslegungen gemäß Ausführungsbeispielen;
- Fig. 8: zeigt ein schematisches Diagramm zur Illustration der Abhängigkeit zwischen Sensorempfindlichkeit und Messgas;
- Fig. 9a, 9b, 9c und 9d: zeigen schematische Darstellungen von möglichen Anwendungen gemäß Ausführungsbeispielen.

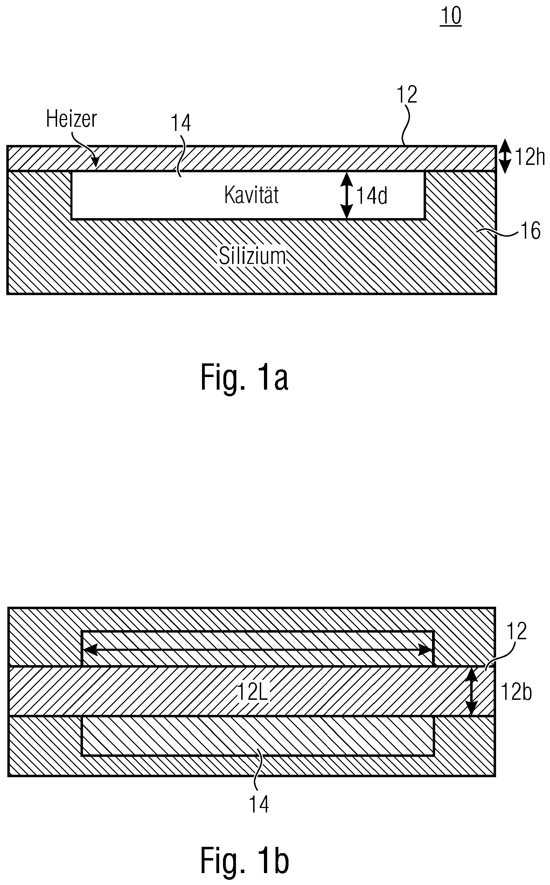

Fig. 1 zeigt in Abbildung a eine Schnittdarstellung einer Sensorzelle 10 und in der Fig. 1b eine Draufsicht. Die Sensorzelle 10 umfasst einen Heizer 12, der beispielsweise als freitragende Struktur über einer Kavität 14 angeordnet ist. Die Kavität 14 kann beispielsweise in ein Siliziumsubstrat 16 eingebettet sein. Der Heizer 14 kann durch Anregung mittels einer Ansteuerfrequenz zur thermischen Schwingung angeregt werden. Hierbei wird derselbe beispielsweise mittels einer Wechselspannung/-strom mit der entsprechenden Frequenz durchflossen. Ausgehend von der Anregung stellt sich eine frequenzabhängige Temperaturüberhöhe sowie ggf. ein Tiefpassverhalten ein. Diese Temperaturüberhöhe bzw. dieses Tiefpassverhalten ist von Geometrieparametern und Materialeigenschaften abhängig. Wesentliche Geometrieparameter sind beispielsweise die Höhe des Heizers 12h, die Breite des Heizers 12b sowie die Länge des Heizers 12l. Ein weiterer Parameter ist das Volumen der Kavität 14, das im Wesentlichen von der Höhe der Kavität 14d abhängig ist. Das Siliziumsubstrat 16 bzw. die Unterseite der Kavität 14 dient als Temperatursenke für den Heizer 12, wobei die Wärmeübertragung in die Temperatursenke von der Dicke 14d der Kavität 14 abhängt.

Eine so zur Schwingung angeregte Sensorzelle 10 ist ausgebildet, um mit einer entsprechenden Frequenz zu schwingen. Diese Frequenz ist abhängig von physikalischen Parametern des umgebenden Gases, sowohl aufseiten der Kavität 14 als auch auf der der Kavität 14 gegenüberliegenden Seite, die beispielsweise als Messseite dient. Einflussfaktoren sind beispielsweise die Temperatur, der Druck, insbesondere aber die Wärmeleitfähigkeit und die volumetrische Wärmekapazität. Das ermöglicht umgekehrt, dass ausgehend von dem Schwingungsverhalten des Heizers diese physikalischen Parameter Wärmeleitfähigkeit und/oder volumetrische Wärmekapazität bestimmt werden können. Hierzu wird das Schwingungsverhalten beispielsweise mittels eines Detektor (nicht dargestellt) überwacht.

Das Verfahren lässt sich wie folgt bestimmen:
- Heizer wird periodisch angeregt (Strom oder Spannung) und erwärmt sich (Joulesche Wärme).
- Temperatur des Heizers variiert und ist abhängig vom Wärmetausch mit dem umgebenden Gas (das die freitragende Heizstruktur 12 umgebende/zu analysierende Gas).
- Wärmeleitfähigkeit und volumetrische Wärmekapazität beeinflussen dynamische Wärmeabgabe an das Gas.
- als Folge dessen kann die dynamische Temperaturantwort des Heizers 12 (z. B. Amplitude und Phase) gemessen werden und zur Detektion kann eine resisitive oder thermoelektrische Überwachung der thermischen Antwort erfolgen. Hierdurch stellt sich beispielsweise folgende Heizübertragungstemperatur T ein. T = Funktion (L, h, b, d, kₕ, cvₕ, k_{gas}, cv_{gas}) mit folgenden Ersatzparametern: R_{Heizer} = L / (h*b*kₕ); C_{Heizer} = cvₕ*b*h*L; R_{Gas}=d / (L*b*k_{gas}); C_{Gas}=d * b*L*cv_{gas}.

Wenn Gase unterschiedliche k_{gas} und cv_{gas} aufweisen, ist die Amplitude und das dynamische Verhalten mit der Frequenz unterschiedlich. Das System zeigt ein Hochpassverhalten, d. h. die Temperatur nimmt mit steigender Frequenz ab und die Phasenverschiebung nimmt mit steigender Frequenz zu. Dieses frequenzabhängige Verhalten kann neben der Sensordimensionierung auch von den Gaseigenschaften abhängen. Wird das Gleichgewicht zwischen den Skalierungsfaktoren für Breite vom Heizer b und die Breite der effektiven Wärmeübertragungsfläche an das Gas b_{gas} angenommen, wird die Grenzfrequenz durch folgenden Zusammenhang beschrieben. Für b_{gas} = b lassen sich die Skalierungsfaktoren eliminieren und es gilt: ${f}_{Grenz} = \frac{h ⋅ {k}_{h}}{2 ⋅ π ⋅ {L}^{2} \left({cv}_{h}⋅h+{cv}_{gas}⋅d\right)} + \frac{{k}_{gas}}{2 ⋅ π ⋅ d \left({cv}_{h}⋅h+{cv}_{gas}⋅d\right)}$

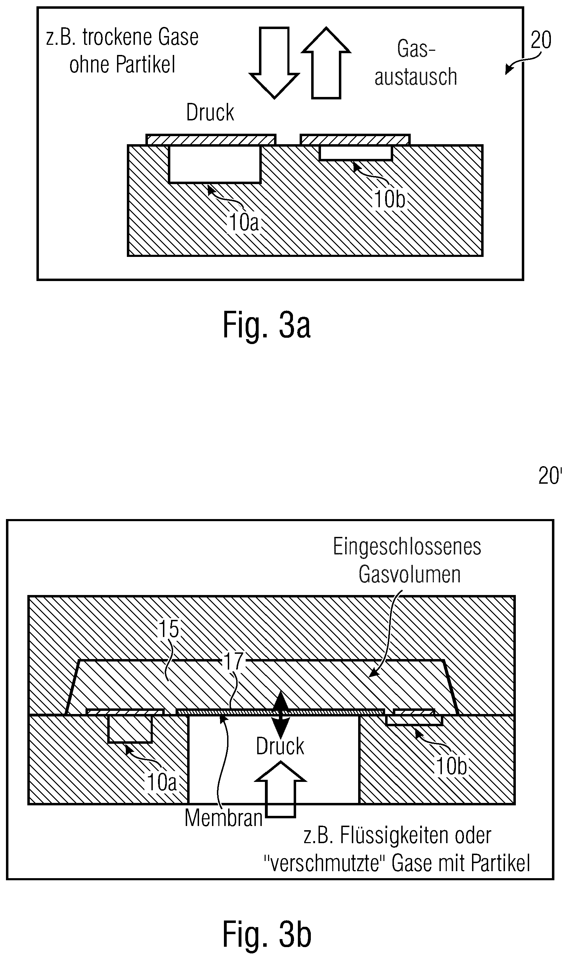

Hierdurch lässt sich ableiten, dass die Grenzfrequenz umso kleiner wird, je geringer die Wärmeleitfähigkeit und höher die volumetrische Wärmekapazität ist. Das heißt also, dass eine Druckerhöhung die Grenzfrequenz des Systems verringert. Eine Temperaturerhöhung vergrößert die Grenzfrequenz des Systems. Dieser Hintergrund aus physikalischer Sicht führt zur Erkenntnis der Erfindung, dass durch die Verwendung von zwei Sensorzellen unterschiedlicher Dimensionierung (ggf. mit unterschiedlicher Ansteuerfrequenz), wie sie beispielsweise in Fig. 3a oder 3b gezeigt sind, erreicht werden kann, dass die Wärmeleitfähigkeit k_{gas} bzw. sₖ sowie die volumetrische Wärmekapazität s_{cv} bzw. cv_{gas} unabhängig voneinander bestimmt werden kann. Hierbei wird beispielsweise ein Sensor mit einer hohen Empfindlichkeit gegenüber der Wärmeleitfähigkeit in Kombination mit einem Sensor mit einer hohen Empfindlichkeit gegenüber der volumetrischen Wärmekapazität eingesetzt. Fig. 3a zeigt eine Sensoranordnung 20 mit einem ersten Sensor 10a und einem zweiten Sensor 10b. Wie zu erkennen ist, sind die Sensoren unterschiedlich groß dimensioniert, wobei das Grundprinzip dem aus Fig. 1a und Fig. 1b entspricht. Beide Sensorzellen 10a und 10b sind mit ihrer der Kavität abgewandten Seite einem zu untersuchenden Gas zugewandt bzw. so in eine Vorrichtung eingebettet, dass hier ein Gasaustausch, z. B. mit trockenen Gasen ohne Partikel, erfolgen kann.

Mögliche Variationsparameter für die unterschiedlichen Dimensionierung der (zwei) Sensorzellen sind beispielsweise :
- Geometrische Parameter (Länge, Breite, Schichtdicke)
- Ein Heizer kann aus mehreren Heizern aufgebaut sein (z.B. zwei Heizer parallel, Kombination mehrerer Heizer-Formen)
- Heizer-Formen (Löcher z. B. Wabenstrukturen, mit Membran, Mäander, ....)
- Materialien/-kombinationen (thermische Eigenschaften, Passivierung, ...)

**Fig. 3b** **zeigt** einen etwas variierten Aufbau, bei welchem die Sensoren 10a und 10b in der Sensoranordnung 20' über ein eingeschlossenes Volumen indirekt angekoppelt sind. Das eingeschlossene Volumen ist mit dem Bezugszeichen 15 versehen und gegenüber der Umgebung über eine Membran 17 gekapselt. Auf diese Membran 17 wirkt das zu messende Gas bzw. das zu messende Medium Flüssigkeit oder verschmutztes Gas mit Partikel ein.

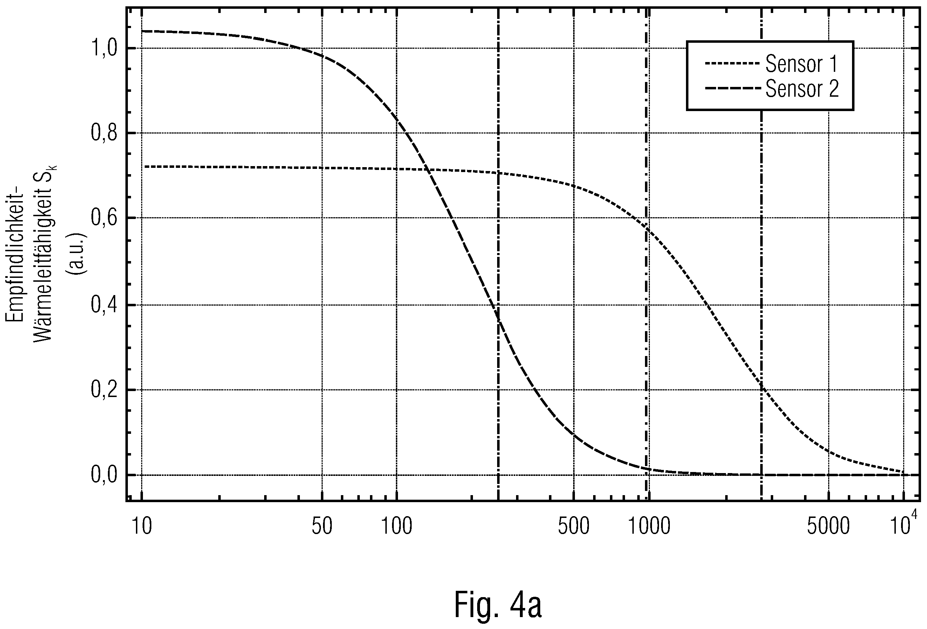

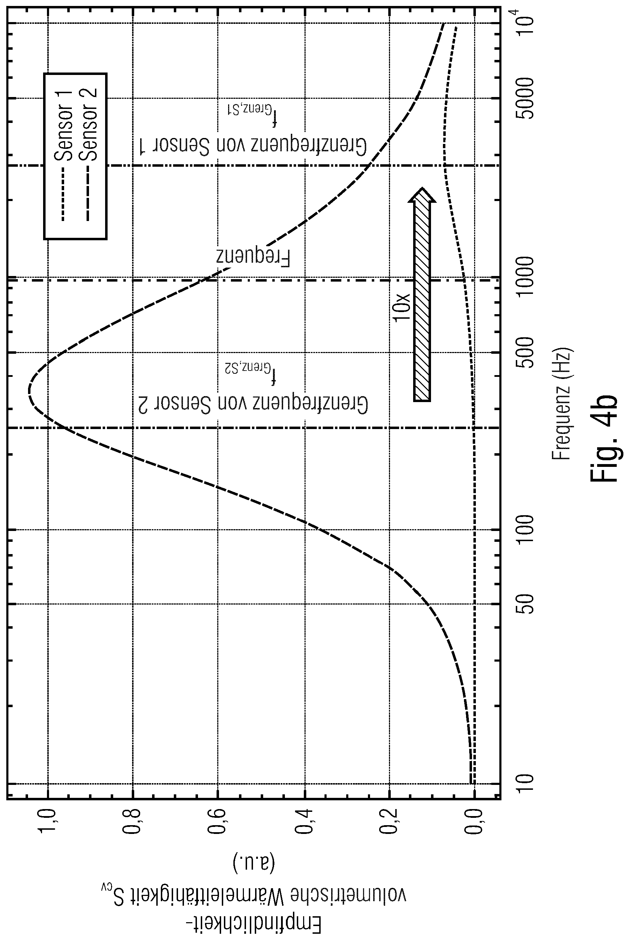

Wie deutlich zu erkennen ist, ist sowohl bei der Ausführung aus Fig. 3a als auch aus der Ausführung aus Fig. 3b die Dimensionierung der Sensorzellen 10a und 10b unterschiedlich. Insofern stellen sich unterschiedliche Sensitivitäten gegenüber den zu messenden Größen volumetrischer Wärmekapazität cv und Wärmeleitfähigkeit k ein. Dieses Prinzip wird beispielsweise anhand der Fig. 4a und 4b deutlich. Fig. 4a zeigt die Empfindlichkeit für die Wärmeleitfähigkeit Sₖ aufgetragen über die Frequenz für zwei verschiedene Sensoren, während Fig. 4b die Empfindlichkeit für die volumetrische Wärmekapazität S_{cv}, wiederum aufgetragen über die Frequenz, für dieselben zwei Sensoren zeigt. Es ist zu erkennen, dass Sensor 2, insbesondere in einem Frequenzbereich von 10 - 100 Hz, zwar empfindlicher ist als der Sensor 1, wobei der Sensor 1 über dem gesamten Frequenzbereich oder zumindest bis 1000 Hz eine bessere Empfindlichkeit ausbildet. Der Unterschied zwischen den Empfindlichkeiten zwischen Sensor 1 und Sensor 2 ist nicht signifikant in diesen Beispielen, so dass es hier auf den Betriebspunkt von Sensor 1 und Sensor 2 ankommt. Wenn beispielsweise der Betriebspunkt bei 350 Hz gewählt wird, ist Sensor 1 für die Empfindlichkeit der Wärmeleitfähigkeit zu bevorzugen. An dieser Stelle sei angemerkt, dass die Diskussion der Betriebspunkte nur exemplarisch ist und von Sensor zu Sensor variiert. Im Diagramm aus Fig. 4b ist die Empfindlichkeit für die volumetrische Wärmekapazität S_{cv} für die zwei Sensoren 1 und 2 aufgetragen. Wie zu erkennen ist, bildet sich hier eine signifikant höhere Empfindlichkeit bei Sensor 2 im Vergleich zu Sensor 1 aus. Hierbei würde man wohl den Betriebspunkt im Bereich zwischen 350 und 1000 Hz wählen und Sensor 2 bei der Grenzfrequenz f_{Grenz,S2} betreiben. In diesem Bereich bildet vorteilhafterweise Sensor 1 eine gute Empfindlichkeit für Wärmeleitfähigkeit aus, so dass bei Betrieb der zwei Sensoren mit gleicher Anregungs- bzw. Auswertefrequenz die volumetrische Wärmekapazität und die Wärmeleitfähigkeit unabhängig voneinander mit den zwei verschiedenen Sensoren bestimmt werden kann.

Entsprechend einem weiteren Ausführungsbeispiel kann der Betriebspunkt je Sensor variieren. Bevorzugterweise würde man Sensor 2 für die Bestimmung der Wärmeleitfähigkeit unterhalb, z. B. bei ⅓ seiner Grenzfrequenz f_{Grenz,S2}, betreiben, um die Wärmeleitfähigkeit zu bestimmen. Sensor 2 würde man im Bereich der Grenzfrequenz oder etwas höher als die Grenzfrequenz f_{Grenz,S2} betreiben, um die volumetrische Wärmekapazität zu bestimmen.

Hieraus ergeben sich unterschiedliche Betriebsmodi entsprechend unterschiedlichen Ausführungsbeispielen:
- Unterschiedliche Dimensionierung + unterschiedliche Frequenzen
- Unterschiedliche Dimensionierung + gleiche Frequenzen

Wenn bei obigen Ausführungsbeispielen immer von Frequenz gesprochen wird, kann entweder von Anregungsfrequenz oder auch von Auswertefrequenz ausgegangen werden. Beispielsweise kann der Sensor bei einer bestimmten Frequenz angeregt werden und bei einer weiteren ausgewertet werden. Das ist beispielsweise dann vorteilhaft, wenn ein Chirp-Signal oder ein Dirac-Signal verwendet wird und hier sozusagen unterschiedliche Frequenzen durchgespielt werden. Alternativ können auch fixe Anregungsfrequenzen für beide Sensoren oder für die jeweiligen Sensoren 10a und 10b verwendet werden.

Obige Ausführungsbeispiele haben also gemein, dass zwei thermische Sensoren bzw. mindestens zwei thermische Sensoren unabhängig voneinander angeregt bzw. ausgelesen werden können, so dass die unterschiedlichen Empfindlichkeiten der zwei Sensoren, die entweder unterschiedlich betrieben oder unterschiedlich ausgelegt sind, ausgenutzt werden. Die Empfindlichkeiten lassen sich wie folgt berechnen: ${S}_{k} = \frac{\partial T \left({k}_{gas}, {cv}_{gas}, b, L, h, d,{k}_{h},{cv}_{h}\right)}{\partial {k}_{gas}}$ ${S}_{cv} = \frac{\partial T \left({k}_{gas}, {cv}_{gas}, b, L, h, d,{k}_{h},{cv}_{h}\right)}{\partial {c}_{gas}} .$

Wie oben bereits erläutert, können über den Betriebspunkt die Empfindlichkeiten eingestellt werden.

Entsprechend Ausführungsbeispielen kann die Anregungsfrequenz zur Bestimmung von Wärmeleitfähigkeit unterhalb der Grenzfrequenz liegen, z. B. kleiner ¼ oder kleiner ½. Entsprechend weiteren Ausführungsbeispielen kann die Anregungsfrequenz zur Bestimmung der volumetrischen Wärmekapazität oberhalb der Grenzfrequenz liegen, z. B. etwa Faktor 3 - 20 oberhalb oder allgemein größer Faktor 2 oder 3. In diesen Bereichen sind die Empfindlichkeiten Sₖ und S_{cv} unterschiedlich groß.

Entsprechend Ausführungsbeispielen gilt unabhängig von der Dimensionierung der Strukturen, dass eine hohe Empfindlichkeit gegenüber der Wärmeleitfähigkeit bei geringen Frequenzen erreicht wird. Die Frequenz kann entsprechend Ausführungsbeispielen auch f = 0 sein, was dem DC-Betrieb entspricht. Insofern liegt die Anregungsfrequenz in einem Bereich von f ≥ 0, d.h. z.B. nahe Null. Entsprechend Ausführungsbeispielen sind die Anregungsfrequenzen unterschiedlich, d. h. betragsmäßig unterschiedlich. Entsprechend Ausführungsbeispielen kann bei hohen Frequenzen die Struktur unempfindlich gegenüber der Wärmeleitfähigkeit sein (sₖ gegen 0). Entsprechend weiteren Ausführungsbeispielen kann die Empfindlichkeit gegenüber volumetrischer Wärmekapazität ein lokales Maximum aufweisen. $\partial {S}_{cv} / \partial cv = 0$

Aus der Literatur ist bekannt, dass eine gezielte Optimierung (sowohl der Geometrie als auch der Frequenz) auf Basis des Parameter-Modells nicht möglich ist. Daraus leitet sich die Suche eines geeigneten Optimums für den Arbeitspunkt der Sensoranordnung ab.

Alle oben genannten Ausführungsbeispiele haben also gemein, dass mindestens zwei Sensoren/Sensorzellen mit unterschiedlichen Dimensionierungen, z. B. mindestens eine Größenordnung unterschiedlich, kombiniert sind. Diese können beispielsweise auf einem Siliziumchip integriert sein (d. h. monolithisch) und so verschiedene dynamische Verhalten bei Wärmeausbreitung in Gasen ausbilden. Unterschiedliche Dimensionen/Dimensionierungen der Sensoren schaffen die Basis, dass durch Bestimmung der Amplitude und/oder der Phasenlage des Heizers bei dynamischer Anregung eine Bestimmung der Gaseigenschaften ermöglicht wird.

Typische Dimensionen werden nachfolgend für ein exemplarisches Beispiel angegeben. Hier können alle Dimensionen in Kombination oder auch nur für sich alleine Verwendung finden:
▪ Länge des Heizers: 10 - 1000 µm
▪ Breite des Heizers: 1 - 200 µm
▪ Breite der Wärmeübertragung: 1 - 500 µm
▪ Höhe des Heizers: 0,1 - 2 µm
▪ Höhe der Kavität: 0,05 - 500 µm

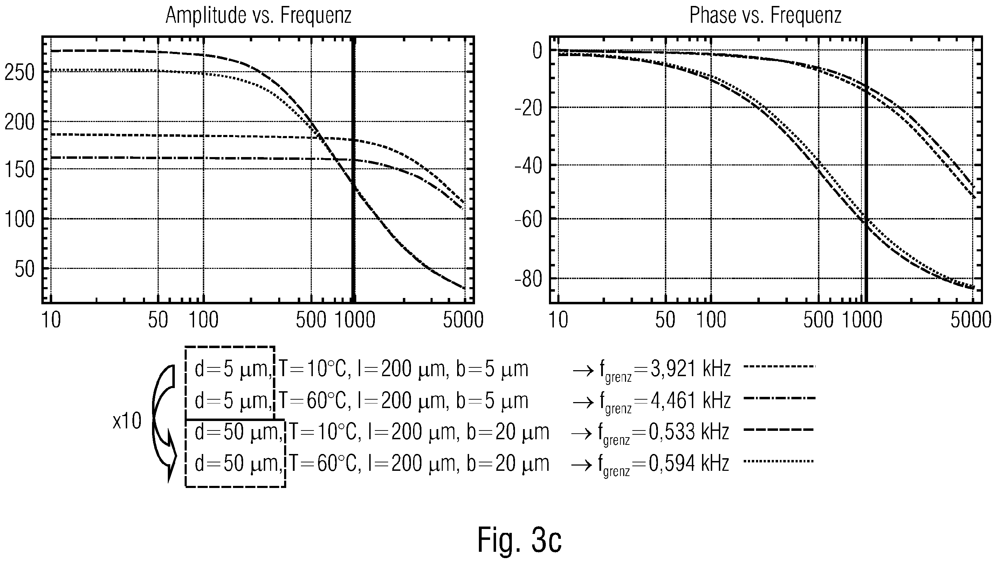

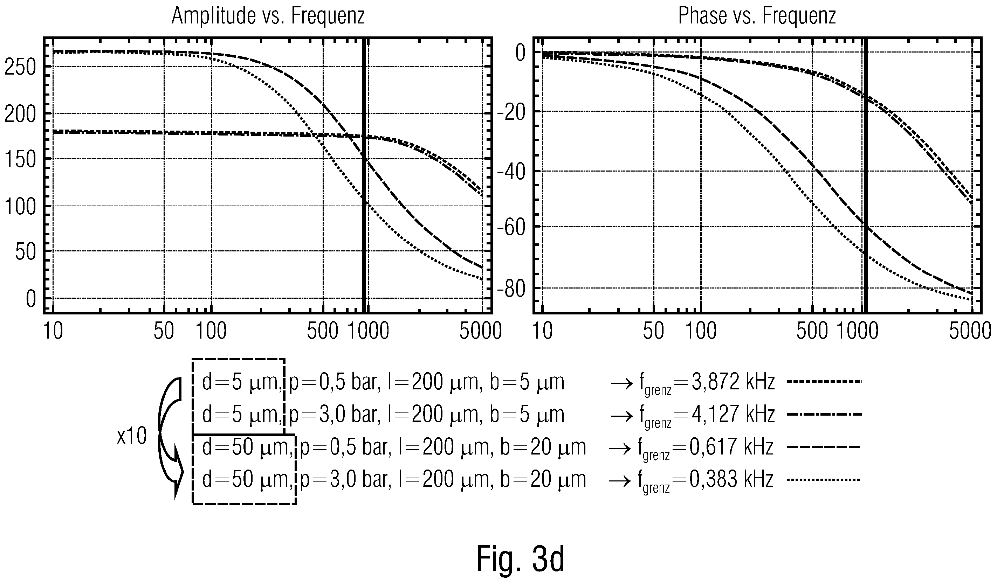

Mit diesen Dimensionen sind Sensorzellen unterschiedlicher Dimensionierung und damit unterschiedlichen Schwingungsverhalten herstellbar. Das Schwingungsverhalten äußert sich insbesondere anhand der Grenzfrequenz f_{Grenz}. In Fig. 3c sind vier verschiedene Sensoren mit unterschiedlichen Grenzfrequenzen und damit mit unterschiedlichen Schwingungsverhalten aufgelistet bzw. in entsprechenden Diagrammen (Amplitude vs. Phase sowie Phase vs. Frequenz) illustriert. Wie zu erkennen ist, kann durch die Variation der Kavitätshöhe d eine signifikante Verschiebung der Grenzfrequenz um beispielsweise Faktor 10 erreicht werden. Dieser Sensor ist für einen konstanten Druck bei beispielsweise 1 bar und schwankende Temperaturen im Bereich von 10 - 60°C ausgelegt. Auch bei konstanter Temperatur (z. B. 24°C) und schwankendem Druck im Bereich von 0,5 - 3,0 bar zeigt sich ein ähnliches Bild, wie anhand von Fig. 3d zu erkennen ist. Hier sind ebenfalls vier Sensoren dargestellt, wobei wiederum zu erkennen ist, dass die Kavitätshöhe (allgemein Höhe des Heizstabes über der Wärmesenke) einen signifikanten Einfluss auf die Grenzfrequenz f_{Grenz} hat.

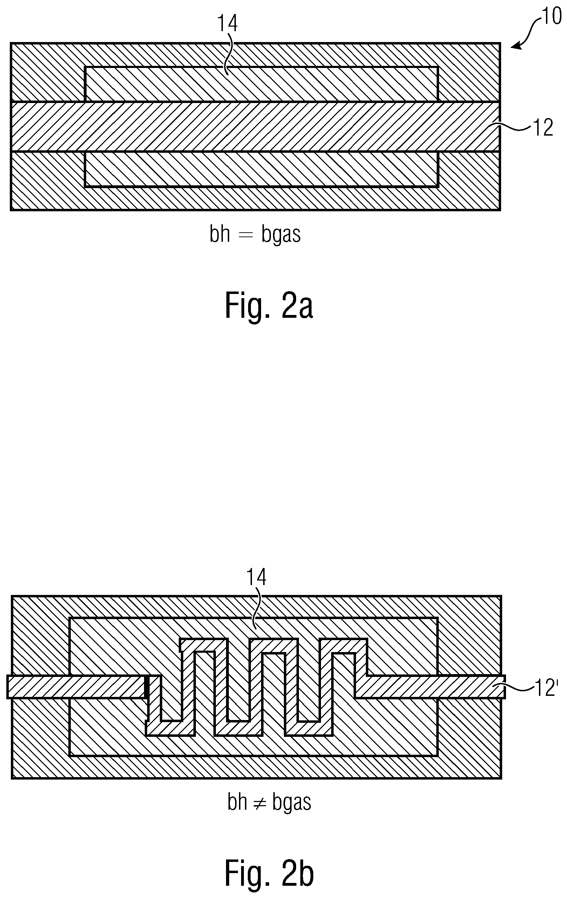

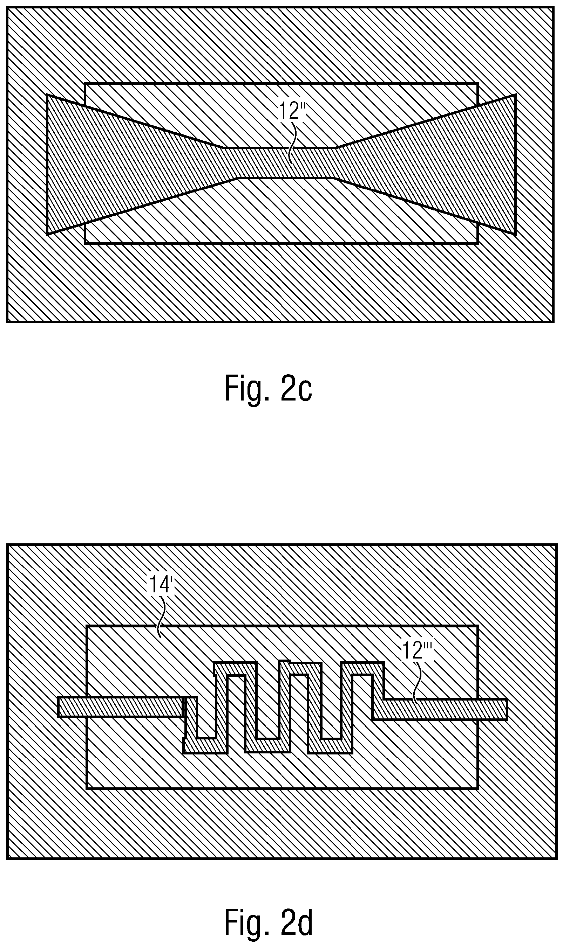

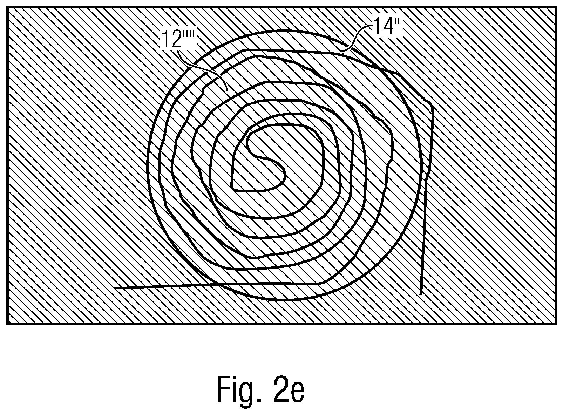

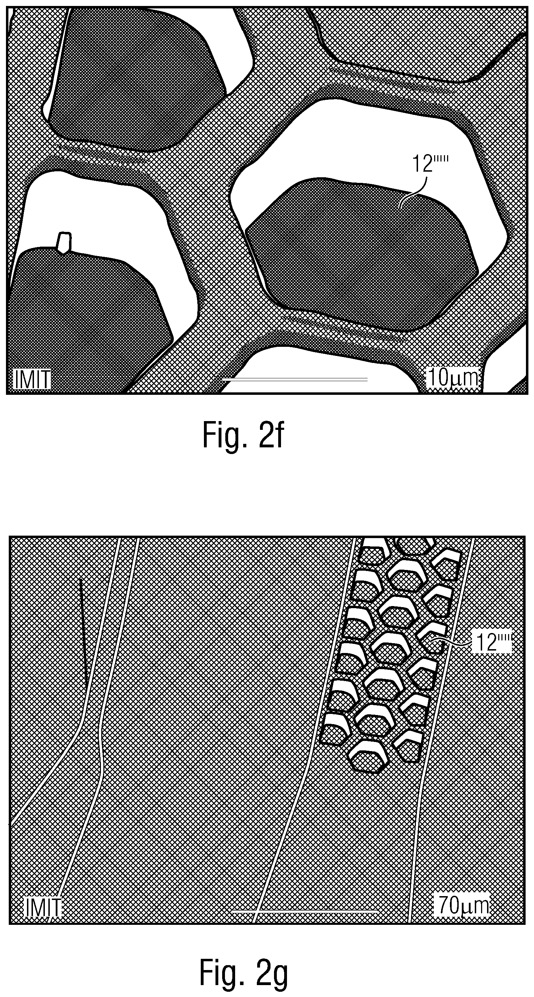

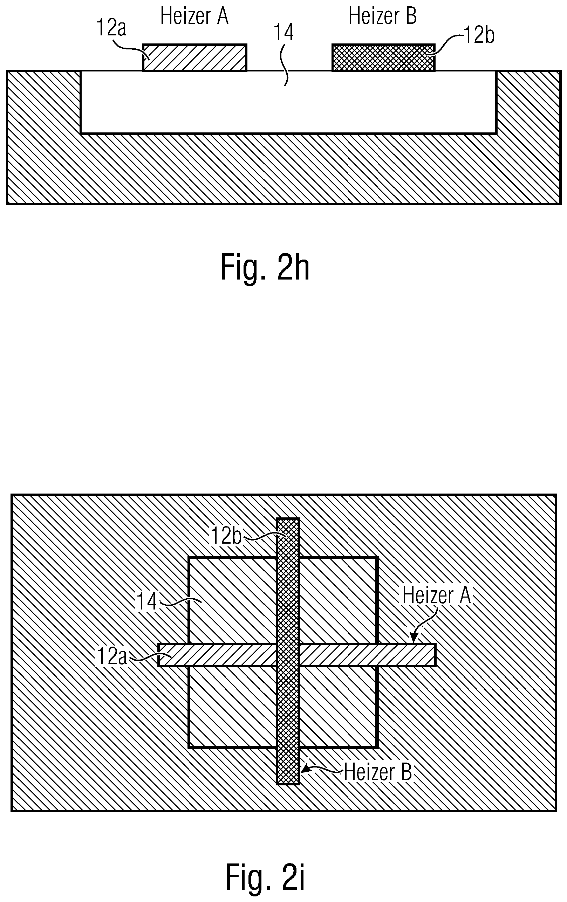

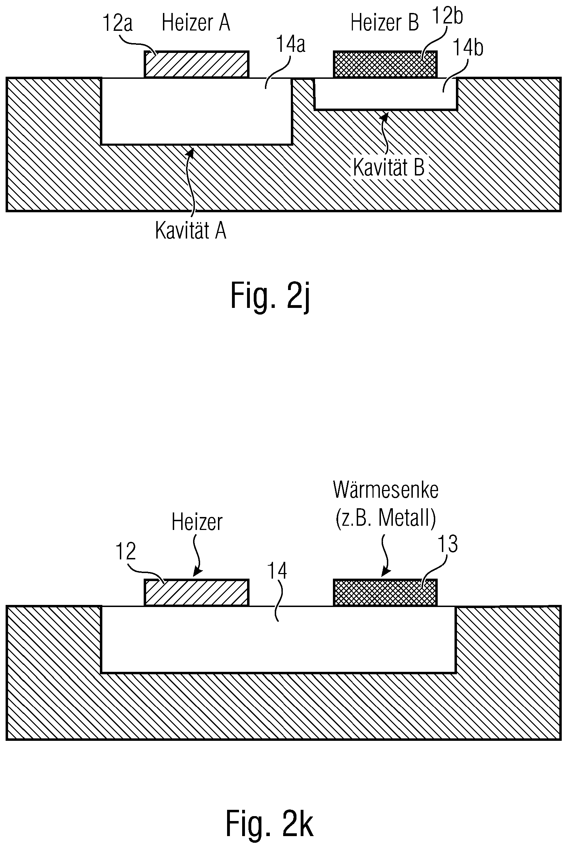

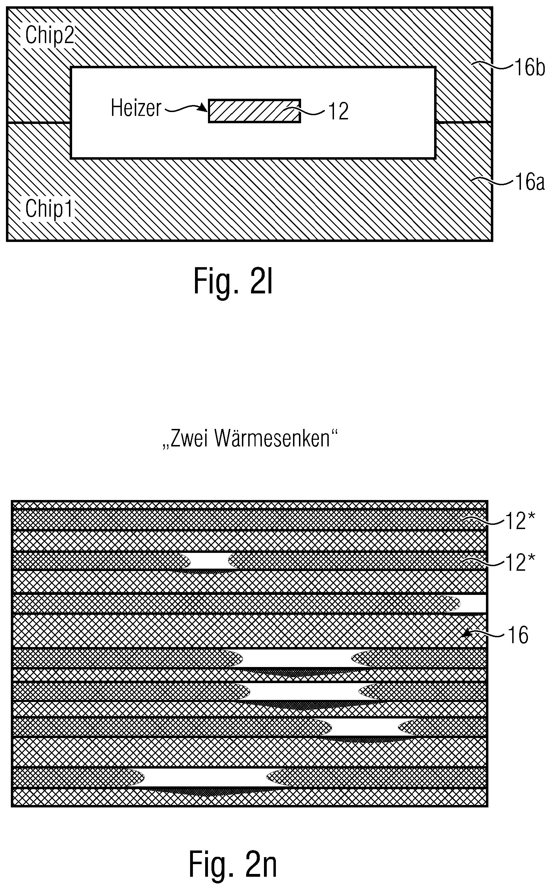

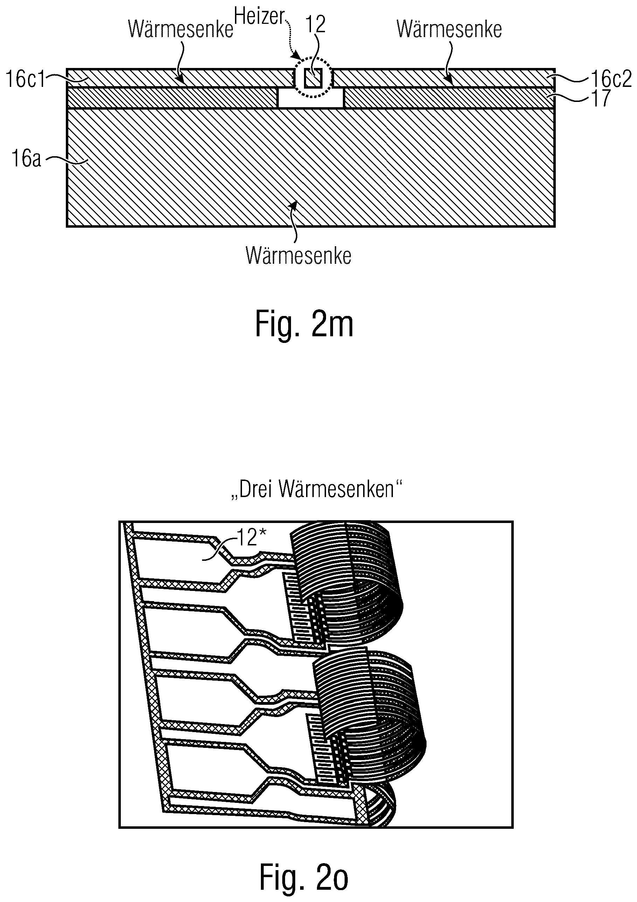

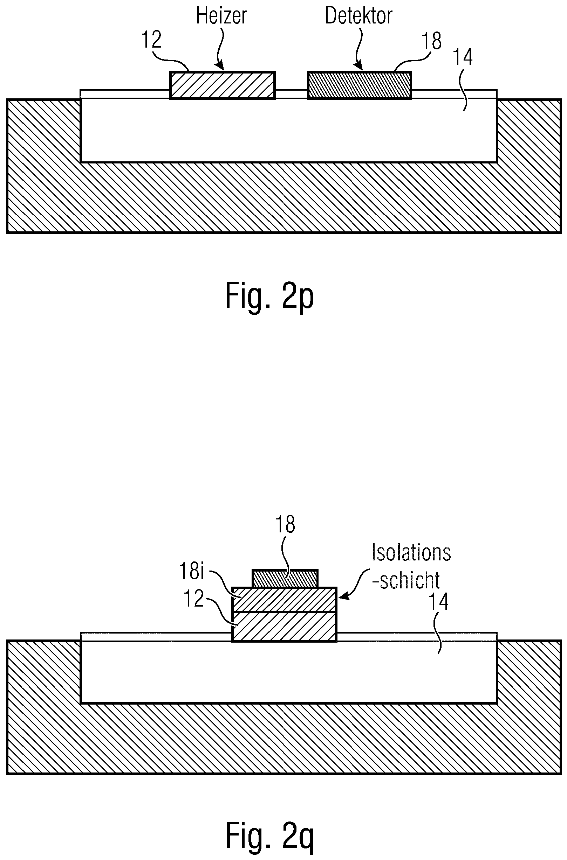

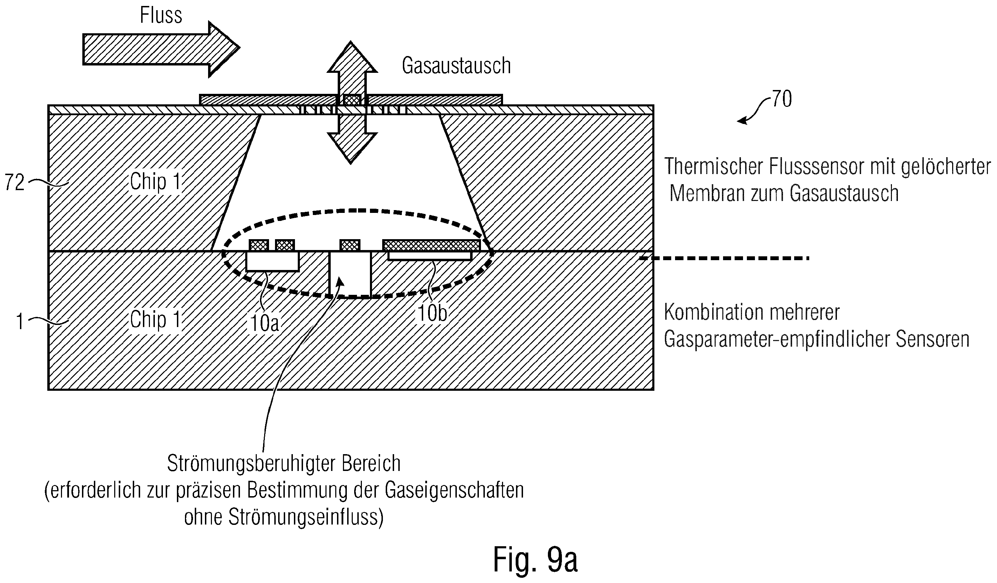

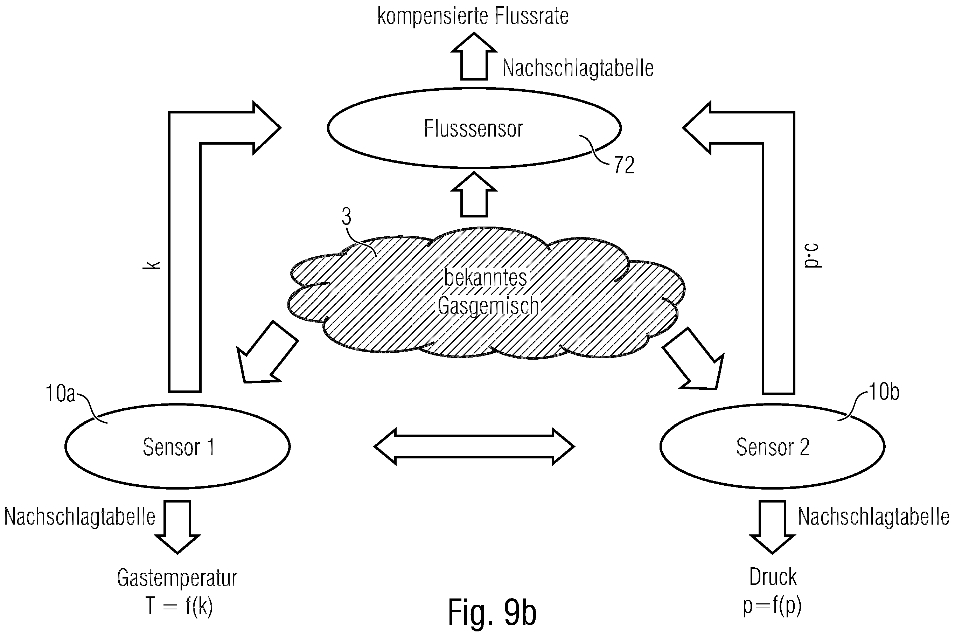

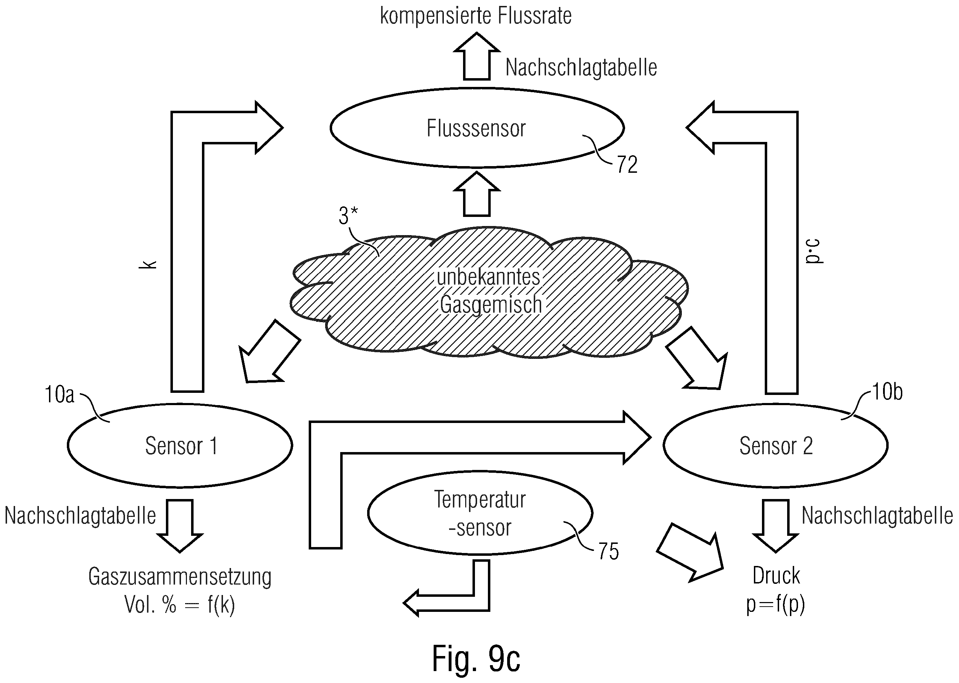

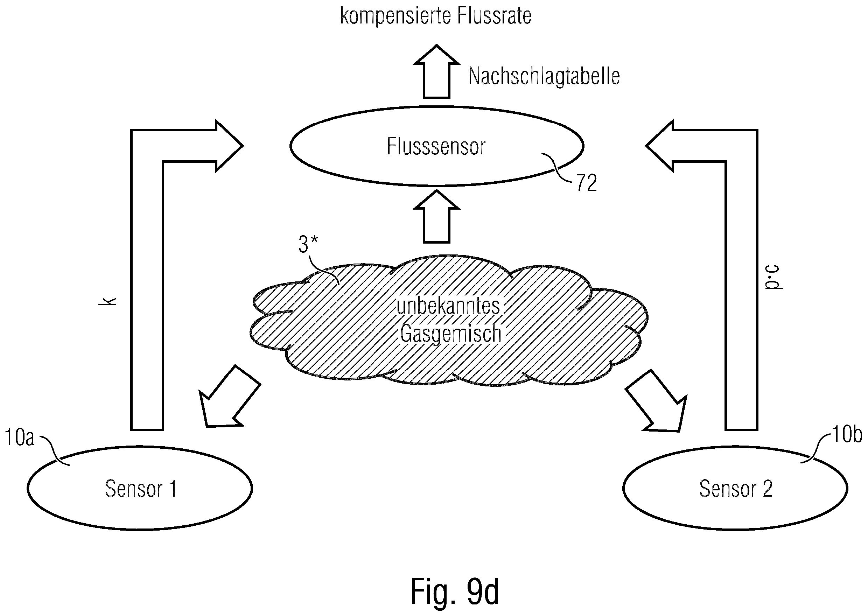

Bei obigen Ausführungsbeispielen wurde z. B. davon ausgegangen, dass der Heizer periodisch mittels eines Rechtecksignals und eines Sinussignals angeregt wird, wobei das Ansprechverhalten des Heizers, d. h. also das Schwingungsverhalten bzw. das thermische Schwingungsverhalten des Heizers, durch einige wenige Thermoelemente oder Widerstandsänderungen überwacht werden kann. Das Ergebnis der Modellierung, bei Anregung von beispielsweise 1 kHz, ist: Amplitude (und Phase) des Heizers zeigen bei einem (großen) Gasvolumen (d = 50 µm, b = 20 µm) eine Abhängigkeit vom Gasdruck und ist unempfindlich gegenüber Temperaturänderungen. Die Amplitude des Heizers zeigt bei einem (kleinen) Gasvolumen (d = 5 µm, b = 5 µm) eine Abhängigkeit von der Gastemperatur, aber Unempfindlichkeit gegenüber Druckänderungen. Insofern hat sich auch hier bei dem Beispiel gezeigt, dass eine Kombination von zwei oder mehr Sensorzellen mit unterschiedlichen Dimensionierungen (d, b, L), bevorzugterweise auf einem Chip, vorteilhaft ist, und neben der Bestimmung der volumetrischen Wärmekapazität sowie der Wärmeleitfähigkeit es auch ermöglicht, Wide-Range-Sensoren für unterschiedliche Messgrößen Temperatur und Druck zu schaffen. Insofern wird entsprechend Ausführungsbeispielen ein gasunabhängiger Wide-Range-Drucksensor (einige mbar bis einige bar) ohne mechanische Komponenten (Diaphragm) geschaffen. Selbstverständlich lassen sich mit diesem Ausführungsbeispiel hier auch die Gaseigenschaften (Bestimmung der Wärmeleitfähigkeit und der volumetrischen Wärmekapazität) bestimmen. Das ermöglicht im nächsten Schritt die Bestimmung der sogenannten Temperaturleitfähigkeit bzw. Produkt aus Dichte und Wärmeleitfähigkeit. Anmerkung: Temperaturleitfähigkeit ist definiert als Wärmeleitfähigkeit/(Dichte*spezifische Wärmekapazität), d.h. a=k/(ρ*c). Diese Größen sind vorteilhafterweise zur präzisen On-Chip-Signalkompensation bei Strömungssensoren oder Drucksensoren einsetzbar, wie nachfolgend im Zusammenhang mit Fig. 9 noch erläutert werden wird. Darüber hinaus sei an dieser Stelle noch darauf hingewiesen, dass zur Schaffung von unterschiedlich dimensionierten Sensoren auch die Geometrie des Heizers variiert werden kann. Denkbar wären Mäanderformen, wabenförmige Heizstrukturen, Wärmespiegel, wie sie im Zusammenhang mit Fig. 2 erläutert werden.

Entsprechend Ausführungsbeispielen besteht der Sensor aus mindestens einem freistehenden Heizelement mit umgebendem Gasvolumen, das periodisch geheizt und dessen Temperatur-Antwort bestimmt wird. Entsprechend Ausführungsbeispielen werden Sensoren entweder gleich oder unabhängig voneinander mittels temperaturabhängigen Widerständen und/oder Thermoelementen ausgelesen
▪ Variante 1: Mindestens ein Sensor wird bei zwei festen Frequenzen oder über zwei Frequenzbereichen gescannt, wo der thermische Sensor einen ausreichend hohen Unterschied bei der Empfindlichkeit gegenüber Wärmeleitfähigkeit und volumetrische Wärmekapazität aufweist
▪ Variante 2: Zwei oder mehrere Sensoren (Sensorarrays) werden durch geometrische Parametervariation (Länge, Breite, Schichtdicke, Form, Höhe der Kavität) und/oder unterschiedlicher Materialeigenschaften so ausgelegt, dass sich die thermische Anbindung an die Wärmesenke unterscheidet und kombiniert, so dass sie in der Empfindlichkeit gegenüber Wärmeleitfähigkeit und volumetrische Wärmekapazität beim Betrieb in einem oder mehreren gewählten Frequenzbereich(en) oder fixen Frequenzen ausreichend variiert
   Entsprechend Ausführungsbeispielen wird eine hohe Empfindlichkeit für Wärmeleitfähigkeit bei Anregungen geringer als Grenzfrequenz erreicht, für hohe Empfindlichkeit gegenüber volumetrischer Wärmekapazität sind Anregungen oberhalb der Grenzfrequenz vorteilhaft.
▪ Anhand der Signalamplitude und/oder dem Phasenversatz können Gaseigenschaften abgeleitet werden
▪ Gemessene Gaseigenschaften (k und cv) werden entweder zur direkten Signalkompensation bei thermischen Strömungssensoren eingesetzt und/oder zur Bestimmung von Gaszusammensetzung und Druck

Entsprechend Ausführungsbeispielen kann eine Anordnung mit mikrotechnischen Fertigungsverfahren prozesskompatibel zu weiteren (thermischen) Sensoren erstellt werden und bietet daher ein hohe Integrationsdichte bei Multiparameter-Anwendungen (z. B. Gaszusammensetzung und Flussrate). Durch das geringe Totvolumen kann die Anordnung außerdem hochdynamisch betrieben werden. Entsprechend Ausführungsbeispielen werden freistehende und von Gas umgebende Heizstrukturen durch Opferschichttechnologie (Oberflächenmikromechanik) oder Bulkmikromechanik (Trockenätzen, ...) realisiert. Die so geschaffenen Heizelemente können periodisch durch Joulesche Erwärmung geheizt werden. Gleichzeitig wird die Temperaturantwort des Heizers überwacht. Diese Anordnung erlaubt es, die Sensorstruktur stark zu miniaturisieren. Die Eigenschaften des Gases beeinflussen die resultierende Temperaturantwort des Heizelements (Amplitude, Phasenverschiebung). Aufgrund des geringen Platzbedarfs lassen sich mehrere dieser Sensoren problemlos mit thermischen Strömungssensoren auf Wafer-Level integrieren. Zusätzlich kommen nur thermische Wandlungsprinzipien zum Einsatz. Diese Kombination macht das System einzigartig.

Entsprechend Ausführungsbeispielen sind die Sensoren ausreichend unempfindlich und können im gleichen Frequenzbereich betrieben werden, z.B. wenn sich durch geometrische Parametervariation (Länge, Breite, Schichtdicke, Form, Höhe der Kavität) und/oder unterschiedlicher Materialeigenschaften die resultierende Grenzfrequenz mindestens um den Faktor 10 unterscheidet.

Beispiele zum Verringern der Grenzfrequenz
- Vergrößerung der Länge des Heizers
- Vergrößerung der Höhe der Kavität.

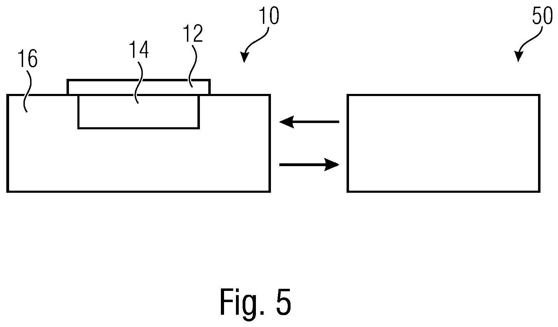

Entsprechend weiteren Ausführungsbeispielen sind gleiche Sensoren ausreichend unempfindlich, z.B. wenn sie in einem ersten Frequenzbereich betrieben werden, der etwa um den Faktor 4 geringer ist als die Grenzfrequenz und einem zweiten Frequenzbereich betrieben werden, der etwa um den Faktor 4 größer ist als die Grenzfrequenz des Sensorsystems Bevor auf diese Details zur Anwendungen der diskutierten Sensoranordnung eingegangen wird, sei an dieser Stelle noch auf ein Vergleichsbeispiel hingewiesen. Durch gezielte Variation der Anregung bzw. Anregungsfrequenz werden bestimmte Sensorgeometrien selektiv zu Messgrößen und unempfindlich gegenüber bestimmten Quereinflüssen. Das gilt für unterschiedliche Sensorgeometrien, aber auch für gleiche Sensorgeometrien. Folglich schafft ein Vergleichsbeispiel ein Sensorsystem umfassend eine Sensorzelle sowie eine Auswertung, wie anhand von Fig. 5 gezeigt werden wird.

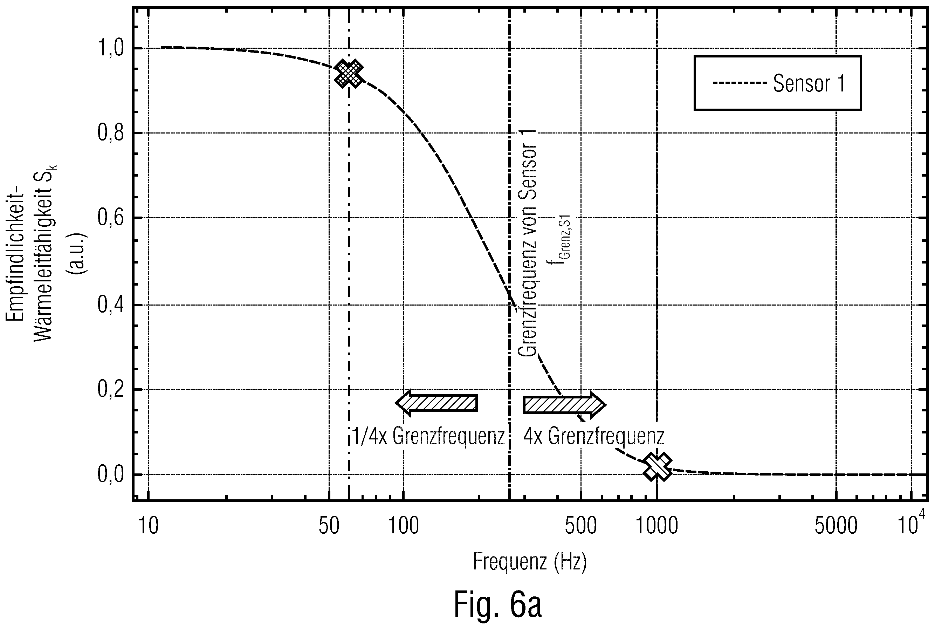

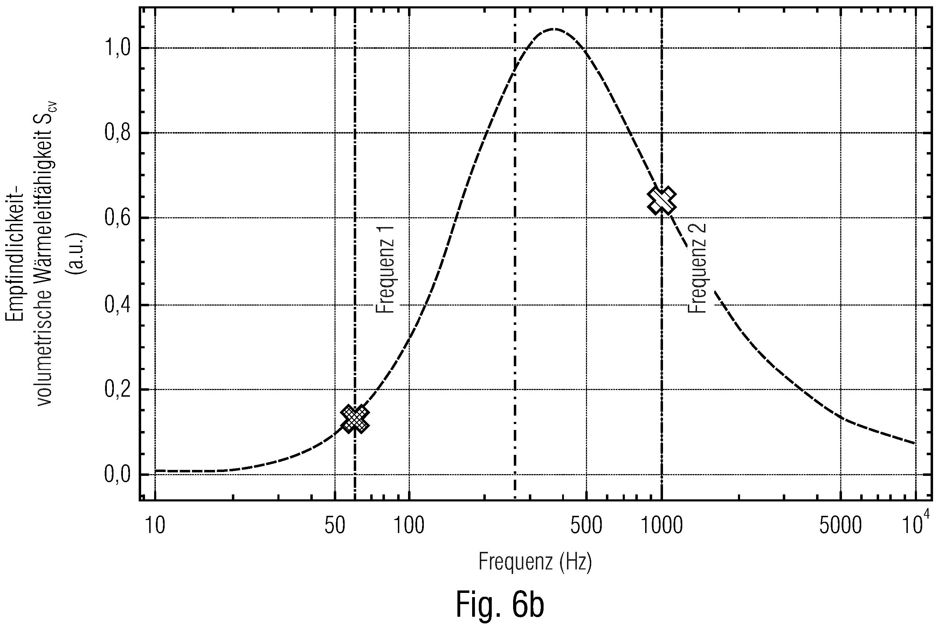

Fig. 5 zeigt eine Sensorzelle 10 mit Heizer 12, Kavität 14 und Substrat 16 in Verbindung mit einer Auswertung 50. Die Auswertung 50 dient zur Ansteuerung der Sensorzelle 10 und ist ausgebildet, um die Sensorzelle 10 mit zumindest zwei unterschiedlichen Anregungsvarianten, wie z. B. mittels zwei unterschiedlichen Anregungsfrequenzen, anzusteuern. Beispielsweise kann der Sensor, dem eine Grenzfrequenz für bestimmte Umgebungsbedingungen innewohnt, mit einer Frequenz signifikant unterhalb der Grenzfrequenz, z. B. bei der Hälfte der Grenzfrequenz oder einem Viertel der Grenzfrequenz, angeregt werden (erste Messung) und für eine zweite Messung mit einer Anregungsfrequenz signifikant oberhalb der Grenzfrequenz, z. B. beim Zwei- oder Dreifachen der Grenzfrequenz. Das heißt also, dass allgemein sich die erste und zweite Messung, die zu unterschiedlichen Zeitpunkten erfolgen, dahingehend unterscheiden, dass unterschiedliche Anregungsfrequenzen verwendet werden, bevorzugterweise eine Anregungsfrequenz kleiner ½ oder kleiner ¼ der Grenzfrequenz und/oder eine Anregungsfrequenz größer dem Dreifachen der Grenzfrequenz. Somit lässt sich also die Sensorzelle 10 bei unterschiedlichen Betriebspunkten betreiben. Wie anhand von Fig. 6a und 6b ersichtlich wird, ermöglicht der Betrieb bei unterschiedlichen Betriebspunkten, dass sich unterschiedliche Empfindlichkeiten für die Wärmeleitfähigkeit und die volumetrische Wärmekapazität ausbilden. Infolgedessen ist die Auswertung 50 dazu ausgebildet, die Wärmeleitfähigkeit mittels der ersten Messung (Betriebspunkt kleiner Grenzfrequenz) zu bestimmen und die volumetrische Wärmekapazität mittels der zweiten Messung (Betriebspunkt größer Grenzfrequenz) zu bestimmen. Zwei exemplarisch gewählte Betriebspunkte bzw. Frequenzen für die zwei Messungen sind in den Diagrammen von Fig. 6a und 6b illustriert. Diese Betriebsweise ist deshalb vorteilhaft, da so mit nur einem Sensor die volumetrische Wärmekapazität und die Wärmeleitfähigkeit unabhängig voneinander bestimmt werden kann. Der Vorteil bei der Variante aus Fig. 3 liegt darin, dass die Messung gleichzeitig erfolgt, während hier bei Fig. 5 die Messung seriell, d. h. also zu unterschiedlichen Zeitpunkten, erfolgt.

Entsprechend weiteren Ausführungsbeispielen kann statt einer Variation der Anregungsfrequenzen mit zwei fixen Frequenzen auch der Sensor 10 mit einem variierenden Signal, z. B. einem Dirac-Signal, angeregt werden und dann die Auswertung bei unterschiedlichen Frequenzen erfolgen, bei welchen sich die entsprechenden Sensitivitäten für die Wärmeleitfähigkeit und die volumetrische Wärmekapazität ausbilden.

Bezüglich der Anregung sei ferner angemerkt, dass beispielsweise ein abwechselndes Springen zwischen zwei Frequenzen zum Erreichen hoher Empfindlichkeit gegenüber Wärmeleitfähigkeit und volumetrische Wärmekapazität (z. B. reines Sinussignal oder Nutzung von Oberwellen) möglich ist. Die mindestens zwei unterschiedlichen Anregungen werden für einen, zwei oder mehreren Sensoren (je nach Aufbau aus Fig. 3 oder Fig. 5) verwendet. Es kommt zu einer modulierten periodischen Anregung mit beiden Auswertefrequenzen für Wärmeleitfähigkeit und volumetrische Wärmekapazität. Mögliche periodische Signalformen neben sinusförmiger Anregung sind Rechtecksignal oder Sägezahnsignal.

Nachfolgend werden Bezug nehmend auf Fig. 2a-o unterschiedliche Sensorzellen erläutert, die bei allen oben genannten Beispielen (Ausführungsbeispielen oder Vergleichsbeispielen) eingesetzt werden können.

Fig. 2a zeigt den bekannten Sensor 10 aus Fig. 1a und 1b mit dem Heizer 12 über der Kavität 14. In Fig. 2b ist ein mäanderförmiger Heizer 12' über der Kavität 14 gezeigt, bei dem Ausführungsbeispiele zeigen, dass durch unterschiedliche Geometrievarianten des Heizers 12' unterschiedliche Dimensionierungen erreicht werden, da der Heizer 12' signifikant länger ist als der Heizer 12. Bei beiden Heizern 12 und 12' handelt es sich um freitragende Strukturen bzw. freitragende Brückenstrukturen, die sich über der Kavität 14 befinden.

Fig. 2c zeigt ebenfalls eine freitragende Brückenstruktur, allerdings mit Zuleitungen, die einen verbreiterten Querschnitt aufweisen. Insofern wird sich ein Temperaturspot des Heizers 12" im Zentrum ausbilden. Ein ähnlicher Temperaturspot bildet sich auch bei dem Heizer 12‴ aus Fig. 2d aus, da hier die Mäanderform insbesondere im Zentrum der Kavität angeordnet ist. Hier ist die Kavität 14' gegenüber der Kavität 14 aus Fig. 2b vergrößert. Alle vorherigen Ausführungsvarianten aus den Fig. 2a, 2b, 2c und 2d hatten gemein, dass die Kavität eine grundsätzlich rechteckige Form hat. Das ist allerdings nicht zwingend notwendig, wie beispielsweise anhand Fig. 2e gezeigt ist.

Fig. 2e zeigt eine Sensorzelle mit einer runden Kavität 14" und einem spiralförmigen Heizer 12ʺʺ. Dieser weist ein flächiges Bild auf.

Wie oben bereits erläutert, kann der Heizer entweder die Form einer freitragenden Brückenstruktur, wie z. B. aus Fig. 2a, 2c oder 2d ersichtlich, aufweisen. Der Heizer besteht beispielsweise aus einem leitfähigen Material, das bei Stromdurchfluss eine entsprechende Joulesche Energie emittiert. Das leitfähige Material, wie z. B. das Metall, formt hierbei die freitragende Struktur. Entsprechend weiteren Ausführungsbeispielen wäre es auch denkbar, dass zusätzliche Stützstrukturen, z. B. von einer Membran oder perforierte Membran, vorgesehen sind. Entsprechend Ausführungsbeispielen kann die freitragende Struktur einseitig oder zweiseitig oder allgemein mehrseitig eingespannt sein. Bei einer einseitig eingespannten Struktur kann man auch von einem Heizsteg sprechen.

Entsprechend Ausführungsbeispielen wäre es auch denkbar, dass der Heizsteg bzw. allgemein die freitragende Struktur perforiert ist, wie in Fig. 2g anhand der Struktur 12ʺʺ gezeigt ist. Eine Vergrößerung der perforierten Struktur 12ʺʺ ist in Fig. 2f illustriert. Hier ist zu erkennen, dass sechseckige Öffnungen vorgesehen sind.

Entsprechend weiteren Ausführungsbeispielen können auch zwei Heizer 12a und 12b über einer Kavität 14 angeordnet sein, wie in Fig. 2h zu erkennen ist. Die Heizer können gleich oder unterschiedlich sein. Die hier dargestellten Heizer 12a und 12b sind parallel zueinander und in einer selben beabstandeten Höhe über der Kavität 14 bzw. der Wärmesenke am Boden der Kavität 14 angeordnet. Entsprechend weiteren Ausführungsbeispielen wäre es auch denkbar, dass die zwei Heizer 12a und 12b sich über der Kavität 14 kreuzen, so dass dann die zwei Heizer 12a und 12b in unterschiedlichen Höhen angeordnet sind.

Entsprechend einer weiteren Variante kann je Heizer 12a und 12b eine eigene Kavität 14a und 14b vorgesehen sein, wie anhand von Fig. 2j illustriert ist.

Bei obigen Ausführungsbeispielen wurde davon ausgegangen, dass die Kavität 14 bzw. 14a bzw. 14b oder um genau zu sein der Boden der Kavität als Wärmesenke dient. Insofern ist der Abstand maßgeblich für das Schwingungsverhalten, so dass über diesen Abstand die einzelnen Sensorzellen unterschiedlich dimensioniert werden können. Entsprechend weiteren Ausführungsbeispielen wäre es auch denkbar, dass eine alternative oder zusätzliche Wärmesenke neben dem Heizer eingebracht wird, was anhand von Fig. 2k gezeigt ist.

Neben dem Heizer 12, der über der Kavität 14 angeordnet ist, ist noch eine weitere Wärmesenke, z. B. aus Metall, vorgesehen, die hier mit dem Bezugszeichen 13 versehen ist. Auch können zwei Wärmesenken durch zwei den Heizer 12a umschließende Substrate 16a und 16b gebildet sein. Zwischen den zwei Substraten 16a und 16b wird eine Kavität ausgebildet, in welcher der Heizer 12 positioniert ist. Die Verwendung von einer Vielzahl von Wärmesenken 16a, 16c und 16d ist in Fig. 2m gezeigt. Bei diesem Ausführungsbeispiel ist auf einem Substrat 16 eine Abstandshalterschicht 17 aufgebracht, die eine Aussparung unter einem Heizer 12 aufweist, so dass unter dem Heizer 12 eine Kavität gebildet ist. Seitlich neben dem Heizer 12 ist in derselben Ebene des Heizers 12 jeweils eine Wärmesenke 16c1 und 16c2 vorgesehen.

Fig. 2n zeigt eine weitere Variante. Hier sind mehrere Heizer 12* als parallele, von einem Substrat 16 beabstandete Strukturen/Heizstege auf die Substratoberfläche des Substrats 16 aufgebracht. Der Heizer des Substrats 12* ist als Heizsteg ausgeführt mit einem Fußpunkt, der gegenüber dem Heizsteg signifikant verbreitert ist. Das hat insbesondere fertigungstechnische Hintergründe. Ein weiterer, ähnlich hergestellter und ausgebildeter Heizer ist in Fig. 2o gezeigt. Hier ist der Heizsteg wiederum mit dem Bezugszeichen 12* versehen. Die Varianten aus Fig. 2n und 2o stellen sogenannte Oberflächenmikromechaniken dar.

Zusammenfassend ist also festzustellen, dass unterschiedlichste Ausführungen Verwendung finden können, z. B. Wabenstrukturen, Membran (mit/ohne Löcher), zusätzliche Elemente zur aktiven Wärmeübertragung an das Messgas (z. B. Aluminium), mäanderförmige Anordnungen, etc. Nachfolgend wird auf die mögliche Anordnung eines optionalen Detektors eingegangen.

Fig. 2p zeigt den Heizer 12 zusammen mit dem Detektor 18. Beide sind nebeneinander in der gleichen Ebene, d. h. gleich beabstandet, über der Kavität 14 angeordnet.

Fig. 2q zeigt den Heizer 12, auf welchem mittels einer Isolationsschicht getrennt der Detektor 18 angeordnet ist. Die Isolationsschicht ist mit dem Bezugszeichen 18i versehen. Vorteilhaft ist hier, dass die Anregung und die Detektion nah beieinander erfolgt, wobei trotzdem Anregung und Detektion getrennt sind. Hierfür gibt es z.B. folgende Detektionsvarianten entsprechend Ausführungsbeispielen:
▪ Widerstands-Detektor wird über Heizer gestapelt und durch Isolationsschicht getrennt
▪ Widerstands-Detektor wird neben Heizer angeordnet (Parallel, Umrundung des Heizers,...)
▪ Thermoelemente können analog zu Widerstands-Detektoren verwendet werden.

Alternativ kann der Heizer selber als Detektor, z.B. durch Auswertung eines elektrischen Antwortsignals verwendet werden. D.h., dass entsprechend weiteren Ausführungsbeispielen die Anregung und die Detektion mit dem gleichen Element (Joulesche Erwärmung des Heizers und resistive Auswertung des Temperatursignals) erfolgen kann. Diese Variante ist nicht dargestellt.

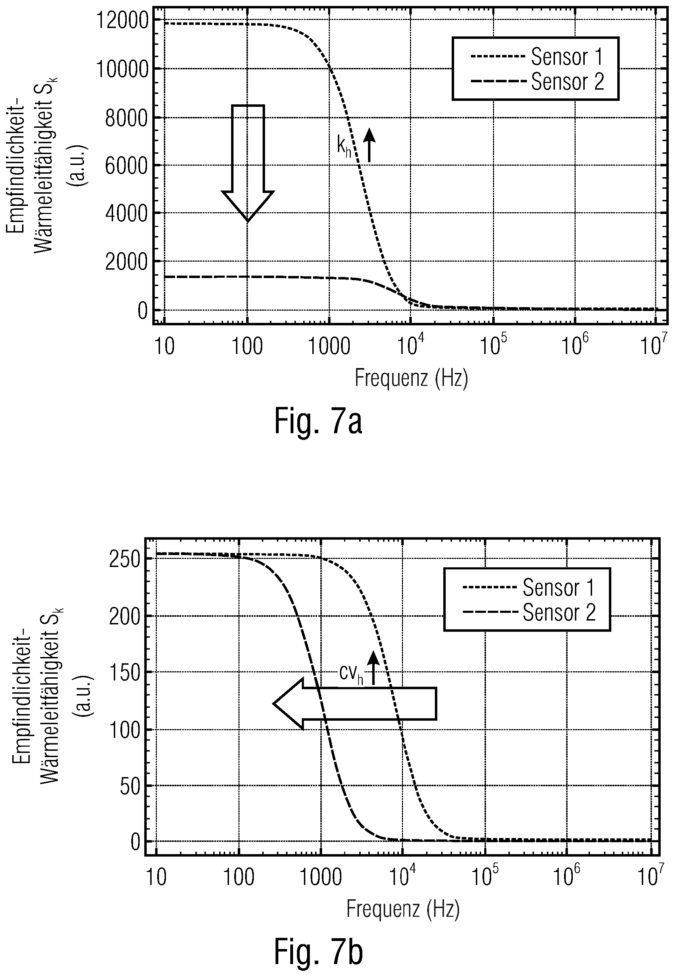

In Fig. 7 werden Möglichkeiten aufgezeigt die frequenzabhängige Empfindlichkeit Sₖ mit Hilfe der Materialeigenschaften der Heizstruktur zu verändern.

Bezug nehmend auf Fig. 7a, die die Empfindlichkeit von kh über die Frequenz und Fig. 7b, die die Empfindlichkeit von cvₕ über die Frequenz für jeweils zwei unterschiedliche Sensoren zeigt, wird die Auslegung von einem bzw. zwei Sensoren bei einer Implementierung nach Fig. 3 oder bei der Implementierung nach Fig. 5 erläutert.

In Fig. 7 a ist die Auswirkung der Wärmeleitfähigkeit des Sensorsignals auf die frequenzabhängige Empfindlichkeit Sₖ gezeigt. Beide Sensoren sind baugleich, jedoch hat die Heizstruktur von Sensor 1 eine geringere Wärmeleitfähigkeit kₕ als Sensor 2. In Fig. 7 b ist die Auswirkung der Wärmeleitfähigkeit des Sensorsignals auf die frequenzabhängige Empfindlichkeit Sₖ gezeigt. Beide Sensoren sind baugleich, jedoch hat die Heizstruktur von Sensor 1 eine geringere volumetrische Wärmekapazität cvₕ als Sensor 2.

Sensor 1 bzw. Messung 1 soll empfindlich gegenüber k sein, während Sensor 2 bzw. Messung 2 unempfindlich gegenüber k sein soll. Hierfür bieten sich zwei unterschiedliche Lösungen an, nämlich:
a) Lösung bei geringen Frequenzen (f << f_{Grenz} bzw. f → 0)
b) Lösung bei höheren Frequenzen im Bereich der Grenzfrequenz (0,5 * f < f_{Grenz}).

Für a) ergeben sich die drei folgenden Optimierungsmöglichkeiten:
▪ Optimiere Verhältnis der Kavitäten: d₁/d₂ > 20
▪ Optimiere Verhältnis der Wärmeleitfähigkeiten der Heizer: kₕ₁/kₕ₂ < 0,05
▪ Optimiere Verhältnis von Produkt aus Schichtdicke und Breite der Heizer: (b₁*h₁)/(b₂*h₂) < 0,2 (Voraussetzung: gleiche Wärmeübertragungsfläche an das Gas).

Für Lösung b) ergibt sich folgende Optimierungsmöglichkeiten:
Optimiere Verhältnis von Produkt aus volumetrischen Wärmekapazität und Höhe des Heizers: (cvₕ₁*h1)/(cvₕ₂*h2) < 0,25

An dieser Stelle sei angemerkt, dass oben genannte Optimierungsmöglichkeiten jeweils als einzelne Ausführungsbeispiele zu verstehen sind, so dass auch weitere Optimierungsvarianten entsprechend weiteren Ausführungsbeispielen denkbar sind.

Entsprechend Ausführungsbeispielen kann eine Geometrieanpassung auf die Gase erfolgen. Je höher k_{gas} desto größer kann die Kavität ausfallen. Eine Verdopplung von k_{gas} führt zur Vervierfachung von d. Je geringer k_{gas} und je höher cv_{gas} ist desto geringer kann die Frequenz gewählt werden.

Ausgehend von Anforderungen, dass mittels Sensor 1 bzw. Messung 1 eine ausreichende Empfindlichkeit gegenüber cv möglich sein soll und dass mittels Sensor 2 bzw. Messung 2 eine ausreichende Unempfindlichkeit gegenüber cv erreicht werden soll, kann folgende Lösung bei höheren Frequenzen im Bereich der Grenzfrequenz gewählt werden.

In der Zusammenschau der beiden Anwendungen unter Berücksichtigung der Lehren, die aus den Fig. 7a und 7b zu ermitteln sind, ist entsprechend Ausführungsbeispielen festzustellen, dass die Wärmeleitfähigkeit bevorzugterweise unterhalb der Grenzfrequenz ausgewertet wird, während die volumetrische Wärmekapazität oberhalb der Grenzfrequenz ausgewertet wird.

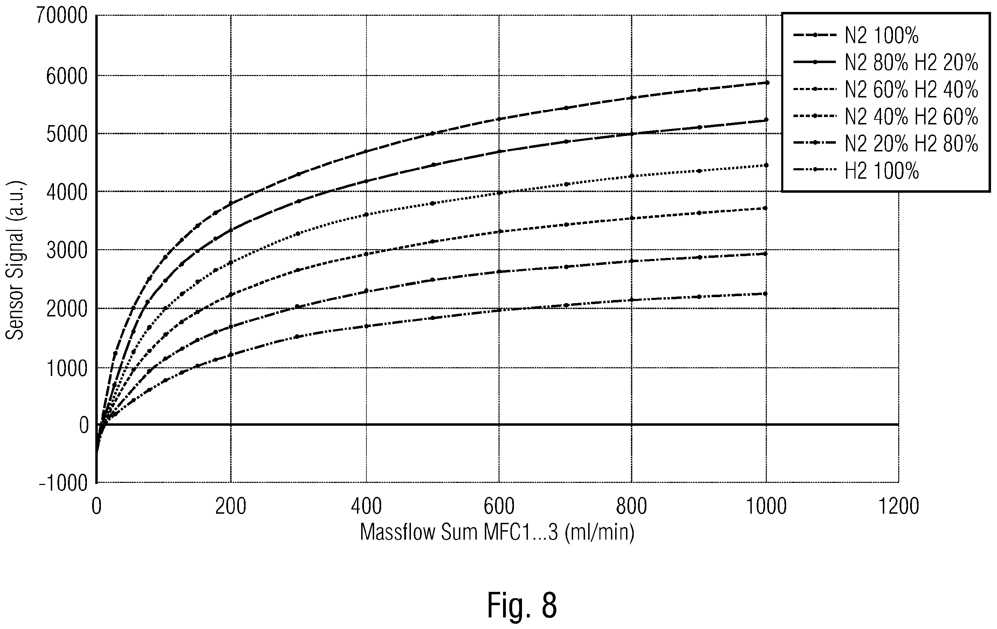

Wie bereits oben erwähnt, hat die Gaszusammensetzung eine Auswirkung auf sämtliche Messungen, und damit auch auf das Ausgangssignal bei thermischen Strömungssensoren, wie anhand von Fig. 8 ersichtlich wird.

Fig. 8 zeigt ein Sensorsignal in Abhängigkeit einer gemessenen Flussrate für unterschiedliche Gaszusammensetzungen. Hier kommt es zur Ausbildung einer Kennlinien-Schar. Hierin wird der Bedarf ersichtlich, dass die relevanten Gasparameter in unmittelbarer Nähe zum thermischen Strömungssensor bevorzugterweise ermittelt werden, um die Kennlinie bei Strömungssensoren zu bestimmen. Gaszusammensetzung lässt sich einfach und effektiv über die Varianten aus Fig. 3 bzw. 5 unter Berücksichtigung der obigen Lehre ermitteln.

Diese mikrotechnischen Sensoren aus Fig. 3 und 5 können entsprechend Ausführungsbeispielen entweder zur Signalkompensation bei thermischen Strömungssensoren mit wechselnden Gasmedien und Betriebsparametern (Druck, Temperatur) genutzt werden, bieten aber auch die Möglichkeit als einzelne Sensoren zur Bestimmung der volumetrischen Wärmekapazität, Wärmeleitfähigkeit, Temperatur und Druck eingesetzt zu werden.

Hieraus ergibt sich also die Anwendung eines inline-fähigen Flusssensors mit der Möglichkeit zur Signalkompensation. Fig. 9a zeigt einen Flusssensor 70 mit dem eigentlichen Flusssensor 72 in Kombination mit einer Sensoranordnung 1 umfassend die zwei Sensorchips 10a und 10b. Der Sensor 1 hat mehrere Gasparameter-empfindliche Sensoren und befindet sich in einer Kavität des Chips 72, nämlich in einem strömungsberuhigten Bereich. Auf der Oberfläche des Sensors 70 ist ein thermischer Flusssensor mit gelöcherter Membran zum Gasaustausch vorgesehen.

Die Funktionalität ist schematisch in Fig. 9b dargestellt. Fig. 9b zeigt die drei Sensoren 10a, 10b und 72. Mittels des Sensors 10a wird k eines bekannten Gasgemisches 3 bestimmt. Ferner wird mit dem Sensor 10 für dasselbe Gasgemisch 3 ρ * c bestimmt. Diese zwei bestimmten Parameter können zur Kompensation einer Auswerteeinrichtung des Flusssensors 72 übergeben werden, der eine Flussrate des Gasgemisches 3 bestimmt. Die Kompensation kann beispielsweise mittels einer Lookup-Table erfolgen, so dass dann eine kompensierte Flussrate bestimmt wird.

Für ein bekanntes Gasgemisch 3 (Wärmeleitfähigkeit und volumetrische Wärmekapazität bei Referenztemperatur und Referenzdruck sind bekannt) kann sich folgendes Verfahren einstellen:
- Auswertung der Ausgangssignale (Amplitude der Temperaturantwort) von Sensor 10a, die proportional zu der Wärmeleitfähigkeit ist. Die Wärmeleitfähigkeit ist abhängig von der Temperatur und dient zur Bestimmung der mittleren Gastemperatur.
- Erhalten des Ausgangssignals von Sensor 10a wird zur Kompensation der Ausgangssignale von Sensorsignale 10b (Amplitude) genutzt. Ausgangssignal von Sensor 10b ist abhängig von der volumetrischen Wärmekapazität. Durch Kompensation kann Dichte bestimmt werden, was zur Bestimmung von Druck dient.

Entsprechend weiteren Ausführungsbeispielen kann basierend auf den Sensorwerten des Sensors 10a die Gastemperatur T = f(k_{gas}) bestimmt werden, mittels des Sensorsignals des Sensors 10b der Druck p = f(cv_{gas}). Hierbei kann in beiden Varianten eine Lookup-Table verwendet werden. An dieser Stelle sei angemerkt, dass es nicht zwingend erforderlich ist, dass das Gasgemisch bekannt ist (vergleiche Fig. 9c).

Beispielsweise kann unter Verwendung eines weiteren Sensors 75, nämlich eines Temperatursensors, auch basierend auf einem unbekannten Gemisch 3* die Gaszusammensetzung basierend auf dem Sensorsignal des Sensors 10a bestimmt werden. Unter Kenntnis dieser Gaszusammensetzung Vol. % = f(k_{gas}) kann unter Verwendung des Sensorsignals des Sensors 10b eine korrigierte Flussrate bestimmt werden, wie oben bereits erläutert (unter Verwendung des Flusssensors 72).

Wie anhand von Fig. 9d gezeigt ist, ist der Temperatursensor nicht zwingend notwendig, da auch auf Basis des unbekannten Gasgemisches 3* die Bestimmung der zwei Werte k und ρc über die Sensoren 10a und 10b ausreicht, um die Flussrate des Flusssensors 72 zu kompensieren. Die Besonderheit hierin liegt, dass Temperatur, Druck und Gaszusammensetzung nicht direkt bestimmt werden, wobei diese aber auch nicht für die absolute Signalkompensation notwendig sind.

Obige Erläuterungen haben gezeigt, dass ein weiteres Ausführungsbeispiel sich auf einen Flusssensor mit einer Sensoranordnung aus Fig. 3 bezieht. Hierbei hat der Sensor 10a beispielsweise eine hohe Empfindlichkeit für die Wärmeleitfähigkeit und der Sensor 10b eine hohe Empfindlichkeit für die volumetrische Wärmekapazität. Alternativ kann auch der Sensor mit der Auswertung aus Fig. 5 verwendet werden, da entsprechend im Betrieb dieselben Parameter bestimmbar sind.

Ein weiteres Ausführungsbeispiel bezieht sich auf einen Drucksensor, der einen kompensierten Druck unter Kenntnis der Parameter k und ρ * c bestimmt.

An dieser Stelle sei angemerkt, dass die Wärmleitfähigkeit bevorzugterweise unterhalb der Grenzfrequenz ausgewertet wird, wie anhand von Fig. 7a und 7b zu erkennen ist.

Ein weiteres Ausführungsbeispiel bezieht sich auf ein Verfahren zum Betreiben der Sensoranordnung. Hierbei kann entsprechend Ausführungsbeispielen der Arbeitspunkt bestimmt werden. Ein Verfahren zur Bestimmung der optimalen Sensorkonfiguration kann wie folgt gestaltet sein:
Um den Sensor / die Sensoranordnung beispielsweise für einen universellen Messbereich zu konfigurieren, können entsprechend Ausführungsbeispielen die Arbeitspunkte mit einem selbstjustierenden Verfahren gesucht werden:
   ▪ Sensorgeometrie: Erstellung und Variation der Strukturen für den Betrieb mit gleicher Frequenz
   ▪ Sensor-Betrieb: Frequenzscan zur Bestimmung des gasabhängigen AP (auch von Druck/Temperatur abhängig) → Suche des lokalen Maximums für den höchsten Empfindlichkeitsunterschied zwischen Sensorgruppe 1 und 2
Um die optimalen Arbeitspunkte mit der höchsten Empfindlichkeit gegenüber der Messgröße (Wärmeleitfähigkeit oder volumetrische Wärmekapazität) für eine Sensoranordnung innerhalb des mehr-dimensionalen Parameter-Feldes zu bestimmen, müssen Änderungen der Wärmeleitfähigkeit (z. B. Temperaturvariationen, Gaszusammensetzung) und/oder volumetrischen Wärmekapazität (z. B. Druck, Gaszusammensetzung) hervorgerufen werden: Das kann für eine konfigurierte Sensoranordnung auf einem Kalibrier-Messplatz erfolgen. Jedoch auch im nicht-optimalen Arbeitspunkt kann eine Bestimmung der Messgrößen erfolgen, d. h. die Sensoranordnung ist auch im nicht-kalibrierten Zustand verwendbar.

Entsprechend Ausführungsbeispielen weist der Sensorchip, z. B. der Sensorchip aus Fig. 5 oder auch der Sensorchip aus Fig. 3, eine Auswertung auf. Bevorzugterweise werden die ein oder mehreren Sensoren auf einem gemeinsamen Chip hergestellt. Je nach Kompatibilität zu den Fertigungsprozessen mit thermischen Strömungssensoren kann auch der Strömungssensor auf demselben Chip hergestellt werden. Entsprechend einem weiteren Ausführungsbeispiel kann auch der ASIC auf demselben Chip hergestellt werden. Der ASIC oder bzw. allgemein die Auswerteelektronik ist ausgebildet, die Kombination der Signale mehrerer Sensoren zur dynamischen On-Chip-Signalkompensation von thermischen Strömungssensoren leicht zu verarbeiten. Somit wird also ein stark miniaturisierter Sensor mit hoher Dynamik und Potenzial zur monolithischen Integration geschaffen.

Entsprechend Ausführungsbeispielen sind ein oder mehrere Sensoren oder ein und/oder mehrere Sensoren zusammen mit der Auswertung monolithisch integriert. Hierbei kann dann entweder nur der Sensor zur Bestimmung der Gasparameter geschaffen werden oder dieser Sensor auch durch Drucksensoren oder Strömungssensoren erweitert werden.

Ein Ausführungsbeispiel schafft eine Sensoranordnung mit mindestens zwei stark miniaturisierten Sensoren mit thermischen Wirkprinzipien zur Bestimmung einer einzelnen Gaseigenschaft (volumetrische Wärmekapazität cv (Produkt aus Dichte und spezifische Wärmekapazität) oder Wärmeleitfähigkeit k). Diese thermischen Sensoren werden so ausgelegt, dass mindestens ein Bauteil eine hohe Empfindlichkeit gegenüber einer Gaseigenschaft aufweist, während mindestens ein anderes Bauteil eine hohe Empfindlichkeit gegenüber einer anderen Gaseigenschaft besitzt. Die Herausforderung besteht bei der Erzeugung einer gaseigenschaftssensitiven Struktur bei gleichzeitiger Minimierung der Querempfindlichkeiten. Wie bereits erwähnt, sind die Gaseigenschaften nicht nur abhängig von der Zusammensetzung, sondern auch von der Temperatur und dem Druck. Dieser Einfluss ist jedoch unterschiedlich stark ausgeprägt und kann dazu genutzt werden, mehrere kombinierte Gaseigenschaftssensoren indirekt zur Ermittlung von Druck und Temperatur einzusetzen. Geringe Druckänderungen (Δp < 10 bar) führen in erster Näherung nur zu Änderung bei der Gasdichte. Variationen bei der Temperatur (ΔT < 50 K) wirken sich hingegen in erster Näherung auf die Dichte und Wärmeleitfähigkeit aus. Die spezifische Wärmekapazität bleibt hingegen nahezu unbeeinflusst von Druck- und Temperaturänderungen.

Beschreibung von oben benutzten Variablen:
- Dimensionen des Heizers: L, b, h
- Höhe der Kavität: d
- Materialeigenschaften des Heizers: cvₕ, kₕ
- Gaseigenschaften k, cv bzw. für bessere Eindeutigkeit k_{gas}, cv_{gas}
- Empfindlichkeiten gegenüber Gaseigenschaften Sₖ, S_{cv}
- Breite der effektiven Wärmeübertragungsfläche an das Gas b_{gas}
- Grenzfrequenzen f_{Grenz} bzw. f_{Grenz,S1}

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gepeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Alternativ kann ein Mikrocontroller (z.B. PSoC: Programmable System on Chip) und/oder Lock-in-Technik eingesetzt werden. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sensoranordnung mit folgenden Merkmalen:
einer ersten Sensorzelle (10a), die thermisch mittels eines ersten Heizers (12a) anregbar ist;
einer zweiten Sensorzelle (10b), die thermisch mittels eines zweiten Heizers (12b) anregbar ist; und
einer Auswertung (50);
wobei die erste Sensorzelle (10a) und die zweite Sensorzelle (10b) gleichartige Sensorzellen sind,
wobei die erste Sensorzelle (10a) und die zweite Sensorzelle (10b) ausgebildet sind, um in Abhängigkeit von einer Gaseigenschaft eines die erste (10a) und die zweite Sensorzelle (10b) umgebenden Gases, insbesondere einer Wärmeleitfähigkeit (k) und/oder volumetrischen Wärmekapazität (cv) und/oder einer Temperatur und/oder einem Druck, ein jeweiliges Schwingungsverhalten, insbesondere ein Schwingungsverhalten des jeweiligen ersten oder zweiten Heizers (12a, 12b), auszubilden,
**dadurch gekennzeichnet, dass** die erste Sensorzelle (10a) und die zweite Sensorzelle (10b) unterschiedlich dimensioniert und/oder ausgelegt sind, und wobei die Auswertung (50) ausgebildet ist, das jeweilige Schwingungsverhalten der ersten Sensorzelle (10a) und der zweiten Sensorzelle (10b) gemeinsam auszuwerten, um die Wärmeleitfähigkeit (k) und volumetrische Wärmekapazität (cv) zu bestimmen, wobei die Wärmeleitfähigkeit (k) auf Basis des Schwingungsverhaltens der ersten Sensorzelle (10a) bestimmt wird und wobei die volumetrische Wärmekapazität (cv) auf Basis des Schwingungsverhaltens der zweiten Sensorzelle (10b) bestimmt wird.

2. Sensoranordnung gemäß Anspruch 1, wobei die erste Sensorzelle (10a) und/oder die zweite Sensorzelle (10b) eine Kavität mit einem Heizer (12), oder eine Wärmesenke mit einem beabstandeten Heizer (12), oder einen von einer Wärmesenke beabstandeten Heizsteg aufweist; und/oder
wobei der Heizer (12) durch einen Heizsteg oder eine freitragende Struktur oder freitragende Brückenstruktur gebildet ist; und/oder
wobei der Heizer (12) oder der Heizsteg ausgebildet ist, um thermisch zu schwingen und so das Schwingungsverhalten auszubilden.

3. Sensoranordnung gemäß einem der vorherigen Ansprüche, wobei die erste Sensorzelle (10a) und/oder die zweite Sensorzelle (10b) einen Detektor aufweist, der ausgebildet ist, um das Schwingungsverhalten zu detektieren.

4. Sensoranordnung gemäß einem der vorherigen Ansprüche, wobei der erste und die zweite Sensorzelle (10b) unterschiedlich dimensioniert sind, wenn sie sich hinsichtlich eines oder mehrerer Parameter aus folgender Gruppe unterscheiden:
- Volumen der Sensorzelle,
- Breite der des Heizers (12) oder des Heizstegs,
- Dicke des Heizers (12) oder des Heizstegs,
- Fläche des Heizers (12) oder des Heizstegs,
- Abstand des Heizers (12) oder des Heizstegs von einer Wärmesenke,
- Höhe des Heizers (12) oder des Heizstegs über der Kavität,
- Breite der Kavität,
- Höhe der Kavität,
- Fläche der Kavität,
- Volumen der Kavität,
- Länge des Heizers (12),
- Geometrie des Heizers (12) oder des Heizstegs,
- Material des Heizers (12) oder des Heizstegs.

5. Sensoranordnung gemäß einem der vorherigen Ansprüche, wobei die erste (10a) und die zweite Sensorzelle (10b) unterschiedlich ausgelegt sind, wenn sich eine jeweilige Grenzfrequenz der ersten (10a) und der zweiten Sensorzelle (10b) um mindestens Faktor 3, mindestens Faktor 5 und/oder mindestens Faktor 10 unterscheidet.

6. Sensoranordnung gemäß einem der vorherigen Ansprüche, wobei die Empfindlichkeit der zweiten Sensorzelle (10b) für volumetrische Wärmekapazität (S_{cv}) um mindestens Faktor 3, mindestens Faktor 4 oder mindestens Faktor 5 höher ist als die Empfindlichkeit der ersten Sensorzelle (10a) für volumetrische Wärmekapazität (S_{cv}); und/oder
wobei die Empfindlichkeit der ersten Sensorzelle (10a) für Wärmeleitfähigkeit (Sₖ) um mindestens Faktor 1,1 oder mindestens Faktor 1,2 höher ist als die Empfindlichkeit der zweiten Sensorzelle (10b) für Wärmeleitfähigkeit (Sₖ).

7. Sensoranordnung gemäß einem der vorherigen Ansprüche, wobei die Auswertung (50) ausgebildet ist, die erste (10a) und/oder die zweite Sensorzelle (10b) periodisch anzuregen.

8. Sensoranordnung gemäß Anspruch 7, wobei die erste (10a) und/o die zweite Sensorzelle (10b) mit einer gleichen Frequenz und/oder mit einer gleichen Frequenz zeitgleich angeregt werden oder wobei die erste (10a) und die zweite Sensorzelle (10b) mit unterschiedlichen Frequenzen und/oder mit unterschiedlichen Frequenzen zeitgleich angeregt werden; und/oder
wobei die Anregung mit einer Anregungsfrequenz erfolgt und wobei die Anregungsfrequenz oder eine Auswertefrequenz der ersten Sensorzelle (10a) unterhalb der Grenzfrequenz liegt oder mindestens unterhalb ½ der Grenzfrequenz oder mindestens unterhalb einem ¼ der Grenzfrequenz liegt; und/oder
wobei die zweite Sensorzelle (10b) mit einer Anregungsfrequenz angeregt wird und wobei die Anregungsfrequenz oder eine Auswertefrequenz der zweiten Sensorzelle (10b) oberhalb einer Grenzfrequenz liegt oder mindestens oberhalb der 3-fachen Grenzfrequenz.

9. Sensoranordnung gemäß einem der vorherigen Ansprüche, wobei die Auswertung (50) das Schwingungsverhalten des ersten und der zweiten Sensorzelle (10b) anhand der dynamischen Temperaturantwort und/oder anhand der Amplitude und/oder anhand der Frequenz und/oder anhand der Phase bestimmt; und/oder wobei die Auswertung (50) ausgebildet ist, das jeweilige Schwingungsverhalten anhand eines Modells zu bestimmen, das die Anregung bei Grenzfrequenz als proportional zur Temperaturleitfähigkeit des Gases beschreibt, wobei die Temperaturleitfähigkeit als Division der Wärmeleitfähigkeit (k) durch die volumetrische Wärmekapazität (cv) definiert ist.

10. Sensoranordnung gemäß einem der vorherigen Ansprüche, wobei die erste Sensorzelle (10a) und/oder die zweite Sensorzelle (10b) auf einen Chip oder monolithisch auf einen Chip integriert sind und/oder wobei die Auswertung (50) als ASIC implementiert ist, wobei der ASIC in einen Chip oder monolithischen Chip integriert ist, der die erste (10a) und zweite Sensorzelle (10b) beherbergt.

11. Sensoranordnung mit folgenden Merkmalen:
einer ersten Sensorzelle (10a), die thermisch mittels eines ersten Heizers (12a) anregbar ist; und
einer zweiten Sensorzelle (10b), die thermisch mittels eines zweiten Heizers (12b) anregbar ist;
wobei die erste Sensorzelle (10a) und die zweite Sensorzelle (10b) gleichartige Sensoren sind;
wobei die erste Sensorzelle (10a) und die zweite Sensorzelle (10b) ausgebildet sind, um in Abhängigkeit von einer Gaseigenschaft eines die erste (10a) und die zweite Sensorzelle (10b) umgebenden Gases, insbesondere einer Wärmeleitfähigkeit (k) und/oder volumetrischen Wärmekapazität (cv) und/oder einer Temperatur und/oder einem Druck, ein jeweiliges Schwingungsverhalten zu ändern,
**dadurch gekennzeichnet, dass** die erste Sensorzelle (10a) und die zweite Sensorzelle (10b) unterschiedlich dimensioniert und/oder ausgelegt sind und wobei das jeweilige Schwingungsverhalten der ersten Sensorzelle (10a) und der zweiten Sensorzelle (10b) gemeinsam auswertbar ist, um die Wärmeleitfähigkeit (k) und volumetrische Wärmekapazität (cv) zu bestimmen, wobei die Wärmeleitfähigkeit (k) auf Basis des Schwingungsverhaltens der ersten Sensorzelle (10a) bestimmt wird und wobei die volumetrische Wärmekapazität (cv) auf Basis des Schwingungsverhaltens der zweiten Sensorzelle (10b) bestimmt wird.

12. Flusssensor mit einer Sensoranordnung gemäß einem der vorherigen Ansprüche, wobei der Flusssensor ausgebildet ist, einen Fluss unter Berücksichtigung der bestimmten Wärmeleitfähigkeit (k) und volumetrischen Wärmekapazität (cv) zu bestimmen.

13. Drucksensor umfassend eine Sensoranordnung gemäß einem der Ansprüche 1 bis 11, wobei der Drucksensor ausgebildet ist, den Druck unter Berücksichtigung der volumetrischen Wärmekapazität (cv) und der Wärmeleitfähigkeit (k) zu bestimmen.

14. Verfahren zur Auswertung (50) einer Sensoranordnung gemäß einem der Ansprüche 1 bis 11 mit den folgenden Schritten:
gemeinsames Auswerten eines jeweiligen Schwingungsverhaltens der ersten (10a) und der zweiten Sensorzelle (10b), um die Wärmeleitfähigkeit (k) und volumetrische Wärmekapazität (cv) zu bestimmen (oder um physikalische Parameter einer ersten Gruppe und physikalische Parameter einer zweiten Gruppe) zu bestimmen, wobei die Wärmeleitfähigkeit (k) auf Basis des Schwingungsverhaltens der ersten Sensorzelle (10a) bestimmt wird und wobei die volumetrische Wärmekapazität (cv) auf Basis des Schwingungsverhaltens der zweiten Sensorzelle (10b) bestimmt wird.

15. Computerprogramm zur Durchführung des Verfahrens nach Anspruch 14, wenn das Verfahren auf der Auswertung (50) läuft.

## Claims

1. A sensor arrangement comprising:
a first sensor cell (10a) which can be excited thermally by means of a first heater (12a);
a second sensor cell (10b) which can be excited thermally by means of a second heater (12b); and
an evaluation (50);
wherein the first sensor cell (10a) and the second sensor cell (10b) are sensor cells of the same kind;
wherein the first sensor cell (10a) and the second sensor cell (10b) are configured to form a respective oscillation behavior, in particular oscillation behavior of the respective first or second heater (12a, 12b), in dependence on a gas property of a gas surrounding the first (10a) and second (10b) sensor cell, in particular heat conductivity (k) and/or volume heat capacity (cv) and/or temperature and/or pressure,
**characterized in that** the first sensor cell (10a) and the second sensor cell (10b) are dimensioned and/or configured differently, and wherein the evaluation (50) is configured to evaluate the respective oscillation behavior of the first sensor cell (10a) and the second sensor cell (10b) together in order to determine the heat conductivity (k) and volume heat capacity (cv), wherein the heat conductivity (k) is determined based on the oscillation behavior of the first sensor cell (10a) and wherein the volume heat capacity (cv) is determined based on the oscillation behavior of the second sensor cell (10b).

2. The sensor arrangement in accordance with claim 1, wherein the first sensor cell (10a) and/or the second sensor cell (10b) comprise a cavity having a heater (12), or a heat sink having a spaced-apart heater (12), or a heating rib spaced apart from a heat sink; and/or
wherein the heater (12) is formed by a heating rib or a self-supporting structure or self-supporting bridge structure; and/or
wherein the heater (12) or heating rib is configured to oscillate thermally and thus form the oscillation behavior.

3. The sensor arrangement in accordance with any of the preceding claims, wherein the first sensor cell (10a) and/or the second sensor cell (10b) comprise a detector configured to detect the oscillation behavior.

4. The sensor arrangement in accordance with any of the preceding claims, wherein the first and second (10b) sensor cells are dimensioned differently if they differ relative to one or more parameters from the following group of:
- volume of the sensor cell,
- width of the heater (12) or heating rib,
- thickness of the heater (12) or heating rib,
- area of the heater (12) or heating rib,
- distance from the heater (12) or heating rib to a heat sink,
- height of the heater (12) or heating rib above the cavity,
- width of the cavity,
- height of the cavity,
- area of the cavity,
- volume of the cavity,
- length of the heater (12),
- geometry of the heater (12) or heating rib,
- material of the heater (12) or heating rib.

5. The sensor arrangement in accordance with any of the preceding claims, wherein the first (10a) and second (10b) sensor cells are configured differently if a respective cutoff frequency of the first (10a) and second (10b) senor cells differs by at least a factor of 3, at least a factor of 5 and/or at least a factor of 10.

6. The sensor arrangement in accordance with any of the preceding claims, wherein the sensitivity to volume heat capacity (S_{cv}) of the second sensor cell (10b) is higher by at least a factor of 3, at least a factor of 4 or at least a factor of 5 than the sensitivity of the first sensor cell (10a) to volume heat capacity (S_{cv}); and/or
wherein the sensitivity to heat conductivity (Sₖ) of the first sensor cell (10a) is higher by at least a factor of 1.1 or at least a factor of 1.2 than the sensitivity of the second sensor cell (10b) to heat conductivity (Sₖ).

7. The sensor arrangement in accordance with any of the preceding claims, wherein the evaluation (50) is configured to periodically excite the first (10a) and/or second (10b) sensor cell.

8. The sensor arrangement in accordance with claim 7, wherein the first (10a) and/or second (10b) sensor cell is excited by an equal frequency and/or an equal frequency at the same time, or wherein the first (10a) and second sensor cells (10b) are excited by different frequencies and/or different frequencies at the same time; and/or
wherein the excitation takes place at an excitation frequency and wherein the excitation frequency or evaluation frequency of the first sensor cell (10a) is below the cutoff frequency or at least below ½ of the cutoff frequency or at least below ¼ of the cutoff frequency; and/or
wherein the second sensor cell (10b) is excited by an excitation frequency and wherein the excitation frequency or evaluation frequency of the second sensor cell (10b) is above a cutoff frequency or at least above three times the cutoff frequency.

9. The sensor arrangement in accordance with any of the preceding claims, wherein the evaluation (50) determines the oscillation behavior of the first and second (10b) sensor cells using the dynamic temperature response and/or using the amplitude and/or using the frequency and/or using the phase; and/or
wherein the evaluation (50) is configured to determine the respective oscillation behavior using a model which describes the excitation at the cutoff frequency to be proportionate to the temperature conductivity of the gas, wherein the temperature conductivity is defined to be a division of the heat conductivity (k) divided by the volume heat capacity (cv).

10. The sensor arrangement in accordance with any of the preceding claims, wherein the first sensor cell (10a) and/or the second sensor cell (10b) are integrated on a chip or monolithically on a chip and/or wherein the evaluation (50) is implemented as an ASIC, wherein the ASIC is integrated in a chip or monolithic chip, which accommodates the first (10a) and second (10b) sensor cells.

11. A sensor arrangement comprising:
a first sensor cell (10a) which can be excited thermally by means of a first heater (12a); and
a second sensor cell (10b) which can be excited thermally by means of a second heater (12b);
wherein the first sensor cell (10a) and the second sensor cell (10b) are sensors of the same kind;
wherein the first sensor cell (10a) and the second sensor cell (10b) are configured to change a respective oscillation behavior in dependence on a gas property of a gas surrounding the first (10a) and second (10b) sensor cells, in particular heat conductivity (k) and/or volume heat capacity (cv) and/or temperature and/or pressure,
**characterized in that** the first sensor cell (10a) and the second sensor cell (10b) are dimensioned and/or configured differently and wherein the respective oscillation behavior of the first sensor cell (10a) and the second sensor cell (10b) can be evaluated together in order to determine the heat conductivity (k) and volume heat capacity (cv), wherein the heat conductivity (k) is determined based on the oscillation behavior of the first sensor cell (10a), and wherein the volume heat capacity (cv) is determined based on the oscillation behavior of the second sensor cell (10b).

12. A flow sensor comprising a sensor arrangement in accordance with any of the preceding claims, wherein the flow sensor is configured to determine a flow while considering the heat conductivity (k) and volume heat capacity (cv) determined.

13. A pressure sensor comprising a sensor arrangement in accordance with any of claims 1 to 11, wherein the pressure sensor is configured to determine the pressure while considering the volume heat capacity (cv) and the heat conductivity (k).

14. A method for evaluating (50) a sensor arrangement in accordance with any of claims 1 to 11, comprising the steps of:
evaluating a respective oscillation behavior of the first (10a) and second (10b) sensor cells together in order to determine the heat conductivity (k) and volume heat capacity (cv) (or determine physical parameters of a first group and physical parameters of a second group), wherein the heat conductivity (k) is determined based on the oscillation behavior of the first sensor cell (10a), and wherein the volume heat capacity (cv) is determined based on the oscillation behavior of the second sensor cell (10b).

15. A computer program for performing the method in accordance with claim 14 when the method runs on the evaluation (50).

## Revendications

1. Dispositif de capteurs comprenant les caractéristiques suivantes :
une première cellule de capteur (10a) pouvant être excitée thermiquement au moyen d'un premier élément chauffant (12a) ;
une deuxième cellule de capteur (10b) pouvant être excitée thermiquement au moyen d'un deuxième élément chauffant (12b) ; et
une unité d'évaluation (50) ;
dans lequel la première cellule de capteur (10a) et la deuxième cellule de capteur (10b) sont des cellules de capteur de même type,
dans lequel la première cellule de capteur (10a) et la deuxième cellule de capteur (10b) sont conçues pour former, en fonction d'une propriété d'un gaz entourant la première cellule de capteur (10a) et la deuxième cellule de capteur (10b), notamment d'une conductivité thermique (k) et/ou d'une capacité thermique volumique (cv) et/ou d'une température et/ou d'une pression, un comportement oscillatoire respectif, notamment un comportement oscillatoire du premier ou du deuxième élément chauffant respectif (12a, 12b),
**caractérisé en ce que** la première cellule de capteur (10a) et la deuxième cellule de capteur (10b) sont dimensionnées et/ou conçues différemment, et **en ce que** l'unité d'évaluation (50) est conçue pour évaluer conjointement le comportement oscillatoire respectif de la première cellule de capteur (10a) et de la deuxième cellule de capteur (10b) afin de déterminer la conductivité thermique (k) et la capacité thermique volumique (cv), la conductivité thermique (k) étant déterminée sur la base du comportement oscillatoire de la première cellule de capteur (10a) et la capacité thermique volumique (cv) étant déterminée sur la base du comportement oscillatoire de la deuxième cellule de capteur (10b).

2. Dispositif de capteurs selon la revendication 1, dans lequel la première cellule de capteur (10a) et/ou la deuxième cellule de capteur (10b) comprennent une cavité avec un élément chauffant (12), ou un dissipateur thermique avec un élément chauffant (12) espacé, ou une barrette chauffante espacée d'un dissipateur thermique ; et/ou
dans lequel l'élément chauffant (12) est formé par une barrette chauffante, une structure en porte-à-faux ou une structure en pont en porte-à-faux ; et/ou
dans lequel l'élément chauffant (12) ou la barrette chauffante est conçu(e) pour osciller thermiquement et former ainsi le comportement oscillatoire.

3. Dispositif de capteurs selon l'une des revendications précédentes, dans lequel la première cellule de capteur (10a) et/ou la deuxième cellule de capteur (10b) comprennent un détecteur conçu pour détecter le comportement oscillatoire.

4. Dispositif de capteurs selon l'une des revendications précédentes, dans lequel la première cellule de capteur et la deuxième cellule de capteur (10b) sont dimensionnées différemment lorsqu'elles diffèrent par un ou plusieurs paramètres du groupe suivant :
- Volume de la cellule de capteur,
- Largeur de l'élément chauffant (12) ou de la barrette chauffante,
- Épaisseur de l'élément chauffant (12) ou de la barrette chauffante,
- Surface de l'élément chauffant (12) ou de la barrette chauffante,
- Distance entre l'élément chauffant (12) ou la barrette chauffante et un dissipateur thermique,
- Hauteur de l'élément chauffant (12) ou de la barrette chauffante au-dessus de la cavité,
- Largeur de la cavité,
- Hauteur de la cavité,
- Surface de la cavité,
- Volume de la cavité,
- Longueur de l'élément chauffant (12),
- Géométrie de l'élément chauffant (12) ou de la barrette chauffante,
- Matériau de l'élément chauffant (12) ou de la barrette chauffante.

5. Dispositif de capteurs selon l'une des revendications précédentes, dans lequel la première cellule de capteur (10a) et la deuxième cellule de capteur (10b) sont conçues différemment lorsque leurs fréquences limites respectives diffèrent d'au moins un facteur 3, d'au moins un facteur 5 et/ou d'au moins un facteur 10.

6. Dispositif de capteurs selon l'une des revendications précédentes, dans lequel la sensibilité de la deuxième cellule de capteur (10b) à la capacité thermique volumique (S_{cv}) est supérieure d'au moins un facteur 3, d'au moins un facteur 4 ou d'au moins un facteur 5 à la sensibilité de la première cellule de capteur (10a) à la capacité thermique volumique (S_{cv}) ; et/ou
dans lequel la sensibilité de la première cellule de capteur (10a) à la conductivité thermique (Sₖ) est supérieure d'au moins un facteur 1,1 ou d'au moins un facteur 1,2 à la sensibilité de la deuxième cellule de capteur (10b) à la conductivité thermique (Sₖ).

7. Dispositif de capteurs selon l'une des revendications précédentes, dans lequel l'unité d'évaluation (50) est conçue pour exciter périodiquement la première cellule de capteur (10a) et/ou la deuxième cellule de capteur (10b).

8. Dispositif de capteurs selon la revendication 7, dans lequel la première cellule de capteur (10a) et/ou la deuxième cellule de capteur (10b) sont excitées à une même fréquence et/ou simultanément à une même fréquence, ou dans lequel la première cellule de capteur (10a) et la deuxième cellule de capteur (10b) sont excitées à des fréquences différentes et/ou simultanément à des fréquences différentes ; et/ou
dans lequel l'excitation s'effectue à une fréquence d'excitation, et dans lequel la fréquence d'excitation ou une fréquence d'évaluation de la première cellule de capteur (10a) est inférieure à la fréquence limite, ou au moins inférieure à la moitié de la fréquence limite, ou au moins inférieure au quart de la fréquence limite ; et/ou
dans lequel la deuxième cellule de capteur (10b) est excitée à une fréquence d'excitation, et dans lequel la fréquence d'excitation ou une fréquence d'évaluation de la deuxième cellule de capteur (10b) se situe au-dessus d'une fréquence limite ou au moins au-dessus du triple de la fréquence limite.

9. Dispositif de capteurs selon l'une des revendications précédentes, dans lequel l'unité d'évaluation (50) détermine le comportement oscillatoire de la première cellule de capteur (10a) et de la deuxième cellule de capteur (10b) à partir de la réponse thermique dynamique et/ou de l'amplitude et/ou de la fréquence et/ou de la phase ; et/ou dans lequel l'unité d'évaluation (50) est conçue pour déterminer le comportement oscillatoire respectif à l'aide d'un modèle qui décrit l'excitation à la fréquence limite comme étant proportionnelle à la diffusivité thermique du gaz, dans lequel la diffusivité thermique est définie comme le rapport entre la conductivité thermique (k) et la capacité thermique volumique (cv).

10. Dispositif de capteurs selon l'une des revendications précédentes, dans lequel la première cellule de capteur (10a) et/ou la deuxième cellule de capteur (10b) sont intégrées sur une puce ou de manière monolithique sur une puce et/ou dans lequel l'unité d'évaluation (50) est mise en œuvre sous la forme d'un circuit intégré spécifique à une application, ASIC, dans lequel l'ASIC est intégré dans une puce ou une puce monolithique qui héberge la première cellule de capteur (10a) et la deuxième cellule de capteur (10b).

11. Dispositif de capteurs comprenant les caractéristiques suivantes :
une première cellule de capteur (10a) pouvant être excitée thermiquement au moyen d'un premier élément chauffant (12a) ; et
une deuxième cellule de capteur (10b) pouvant être excitée thermiquement au moyen d'un deuxième élément chauffant (12b) ;
dans lequel la première cellule de capteur (10a) et la deuxième cellule de capteur (10b) sont des capteurs de même type ;
dans lequel la première cellule de capteur (10a) et la deuxième cellule de capteur (10b) sont conçues pour modifier un comportement oscillatoire respectif en fonction d'une propriété d'un gaz entourant la première cellule de capteur (10a) et la deuxième cellule de capteur (10b), notamment d'une conductivité thermique (k) et/ou d'une capacité thermique volumique (cv) et/ou d'une température et/ou d'une pression,
**caractérisé en ce que** la première cellule de capteur (10a) et la deuxième cellule de capteur (10b) sont dimensionnées et/ou conçues différemment, et **en ce que** le comportement oscillatoire respectif de la première cellule de capteur (10a) et de la deuxième cellule de capteur (10b) peut être évalué conjointement afin de déterminer la conductivité thermique (k) et la capacité thermique volumique (cv), la conductivité thermique (k) étant déterminée sur la base du comportement oscillatoire de la première cellule de capteur (10a) et la capacité thermique volumique (cv) étant déterminée sur la base du comportement oscillatoire de la deuxième cellule de capteur (10b).

12. Capteur de débit comprenant un dispositif de capteurs selon l'une des revendications précédentes, dans lequel le capteur de débit est conçu pour déterminer un débit en tenant compte de la conductivité thermique (k) et de la capacité thermique volumique (cv) déterminées.

13. Capteur de pression incluant un dispositif de capteurs selon l'une des revendications 1 à 11, dans lequel le capteur de pression est conçu pour déterminer la pression en tenant compte de la capacité thermique volumique (cv) et de la conductivité thermique (k).

14. Procédé d'évaluation, au moyen de l'unité d'évaluation (50), d'un dispositif de capteurs selon l'une des revendications 1 à 11, comprenant le fait de :
évaluer conjointement un comportement oscillatoire respectif de la première cellule de capteur (10a) et de la deuxième cellule de capteur (10b), afin de déterminer la conductivité thermique (k) et la capacité thermique volumique (cv) (ou afin de déterminer des paramètres physiques d'un premier groupe et des paramètres physiques d'un deuxième groupe), la conductivité thermique (k) étant déterminée sur la base du comportement oscillatoire de la première cellule de capteur (10a) et la capacité thermique volumique (cv) étant déterminée sur la base du comportement oscillatoire de la deuxième cellule de capteur (10b).

15. Programme informatique destiné à mettre en œuvre le procédé selon la revendication 14, lorsque le procédé est exécuté sur l'unité d'évaluation (50).
